# EUROPÄISCHE PATENTANMELDUNG

(11) **EP 4 653 517 A1**
(43) Veröffentlichungstag der Anmeldung: **26.11.2025**
(21) Anmeldenummer: 24177627.7
(22) Anmeldetag: 23.05.2024
(51) Int. Cl.: C10G 2/00, C01B 3/38, C01B 3/50, C25B 1/02, C25B 1/04

(54) **ANLAGE UND VERFAHREN MIT EINEM AUTOTHERMEN REFORMER ZUR HERSTELLUNG VON SYNTHETISCHEN KRAFTSTOFFEN OHNE KOHLENDIOXIDEMISSION**

(71) Anmelder: EDL Anlagenbau Gesellschaft mbH, 04158 Leipzig (DE)
(72) Erfinder: GAMBERT, Rolf, 04668 Grimma (DE); SCHWARTZE, Jan, 04299 Leipzig (DE)
(74) Vertreter: Henkel & Partner mbB

(57) **Zusammenfassung**

Eine Anlage zur Herstellung von synthetischen Kraftstoffen, insbesondere von Flugturbinenkraftstoff (Kerosin), Rohbenzin und/oder Diesel, umfasst:
a) eine Synthesegasherstellungseinrichtung zur Herstellung eines Kohlenmonoxid, Wasserstoff und Kohlendioxid umfassenden Rohsynthesegases aus i) Kohlendioxid, ii) Wasser, iii) Methan und/oder Wasserstoff und iv) Sauerstoff, wobei die Synthesegasherstellungseinrichtung mindestens einen autothermen Reformer umfasst, wobei der mindestens eine autotherme Reformer mindestens eine Zufuhrleitung i) für Kohlendioxid, ii) für Wasser, iii) für Methan und/oder für Wasserstoff und iv) für Sauerstoff sowie eine Abfuhrleitung für Rohsynthesegas umfasst,
b) eine Trenneinrichtung zur Abtrennung von Kohlendioxid aus dem in der Synthesegasherstellungseinrichtung hergestellten Rohsynthesegas mit einer Abfuhrleitung für Kohlendioxid und einer Abfuhrleitung für Synthesegas,
c) eine Fischer-Tropsch-Einrichtung zur Herstellung von Kohlenwasserstoffen durch ein Fischer-Tropsch-Verfahren aus dem Synthesegas, aus dem in der Trenneinrichtung Kohlendioxid abgetrennt wurde,
d) eine Raffinationseinrichtung zur Raffination der in der Fischer-Tropsch-Einrichtung hergestellten Kohlenwasserstoffe zu den synthetischen Kraftstoffen und
ei) eine Elektrolyseeinrichtung zur Auftrennung von Wasser in Wasserstoff und Sauerstoff umfasst, wobei die Elektrolyseeinrichtung eine Wasserzufuhrleitung, eine Sauerstoff- oder Luftabfuhrleitung und eine Wasserstoffabfuhrleitung aufweist, und, wobei von der Sauerstoffabfuhrleitung die Zufuhrleitung für Sauerstoff in den mindestens einen autothermen Reformer und/oder von der Wasserstoffabfuhrleitung die Zufuhrleitung für Wasserstoff in den mindestens einen autothermen Reformer führt, und/oder
es) einen Methan-Dampfreformer umfasst, welcher mindestens eine Zufuhrleitung für Methan, für Wasser und für Wasserstoff sowie eine Abfuhrleitung für Rohsynthesegas umfasst, wobei die Abfuhrleitung für Rohsynthesegas in den mindestens einen autothermen Reformer führt oder die Anlage ferner eine Wasserstofftrenneinrichtung umfasst, in welche die Abfuhrleitung für Rohsynthesegas führt, wobei die Wasserstofftrenneinrichtung eine Abfuhrleitung für wasserstoffreduziertes Rohsynthesegas, welche in den mindestens einen autothermen Reformer führt, und eine Wasserstoffabfuhrleitung, welche in die Fischer-Tropsch-Einrichtung und/oder in die Raffinationseinrichtung führt, umfasst.

## Beschreibung

Die vorliegende Erfindung betrifft eine Anlage sowie ein Verfahren zur Herstellung von synthetischen Kraftstoffen, insbesondere von Flugturbinenkraftstoff, Diesel und/oder Rohbenzin.

Es gibt eine Reihe verschiedener Verfahren zur Herstellung von Kraftstoffen, wie Flugturbinenkraftstoff, Diesel, Rohbenzin oder dergleichen. Solche Verfahren basieren überwiegend auf der Aufbereitung von fossilen Rohstoffen, wie beispielsweise auf der Raffination von Erdöl, auf der Verflüssigung von Kohle oder auf der Synthese von Kraftstoffen aus Erdgas, Wasser und Sauerstoff. Die Synthese von Kraftstoffen aus Erdgas, Wasser und Sauerstoff wird auch als "gas-to-liquids"-Verfahren bezeichnet. Bei diesen Verfahren wird aus Erdgas, Wasser und Sauerstoff zunächst ein Wasserstoff und Kohlenmonoxid umfassendes Synthesegas hergestellt, welches dann in einer Fischer-Tropsch-Synthese zu Kohlenwasserstoffen umgewandelt wird, die vornehmlich aus langkettigen Normalparaffinen bestehen. Diese Kohlenwasserstoffe werden dann durch Cracken und Isomerisierung zu synthetischen Kraftstoffen umgesetzt.

Ein dazu ähnliches Verfahren ist die als "power-to-liquids" bezeichnete Umwandlung von elektrischer Energie zu synthetischen Kraftstoffen. Hierzu werden Wasser und Kohlendioxid zu Synthesegas umgesetzt, welches dann ähnlich wie in den "gas-to-iiquids"-Verfahren zu synthetischen Kraftstoffen weiterverarbeitet wird.

Ein dazu alternatives, als "power- and biomass-to-liquids" bezeichnetes Verfahren nutzt Biomasse, wie Biomethan und Biogas, oder synthetisches Methan als Kohlenstoffquelle zusätzlich zu Kohlendioxid aus der Luft bzw. aus Punktquellen und ersetzt damit vollständig fossile Kohlenstoffquellen, wie Erdöl oder Erdgas. Beispielsweise werden in einem derartigen Verfahren biogenes Methan, Wasser(dampf) und Kohlendioxid zu Synthesegas umgesetzt, welches dann ähnlich wie in den zuvor genannten Verfahren zu synthetischen Kraftstoffen weiterverarbeitet wird.

Ein wesentlicher Nachteil der vorgenannten Verfahren ist, dass während der Synthesegaserzeugung erhebliche Mengen Kohlendioxid entstehen und emittiert werden. Dies ist jedoch aus umweltpolitischen Gründen und insbesondere aus Klimaschutzgründen unerwünscht. Zudem werden bei diesen Verfahren größere Mengen an Frischwasser benötigt und große Mengen von Abwasser erzeugt. Wasser ist jedoch in der geforderten Reinheit ein teurer Rohstoff, nicht immer in ausreichender Menge verfügbar und größere Abwassermengen sind aus umweltpolitischen Gründen problematisch.

Um bei derartigen Verfahren die Menge an emittierten Kohlendioxid und die Menge an benötigtem Frischwasser zu verringern oder gar auf null abzusenken, wurde in der WO 2022/223458 A1 bereits vorgeschlagen, das Synthesegas in einem Trockenreformer als Synthesegasherstellungseinrichtung herzustellen und nicht nur das in dem Reaktionsprodukt des Trockenreformers, d.h. in dem Rohsynthesegas, verbleibende Kohlendioxid abzutrennen und in den Trockenreformer zurückzuführen, sondern auch das in dem Trockenreformer - zum Bereitstellen der für die stark endotherme Reaktion in dem Trockenreformer notwendige Wärme durch Verbrennen von Brennstoff mit Luft - erzeugte Rauchgas entweder vollständig in den Trockenreformer zurückzuführen und/oder das darin enthaltende Kohlendioxid aus dem Rauchgas abzutrennen und dann das abgetrennte Kohlendioxid in den Trockenreformer zurückzuführen. Dieses Verfahren hat jedoch den Nachteil, dass die Aufbereitung der Rauchgase bzw. das Entfernen von Kohlendioxid hieraus aufwendig und regelungstechnisch komplex ist und zudem entsprechend teure Rauchgasaufbereitungseinheiten erfordert. Darüber hinaus ist der Einsatz des Trockenreformers durch die getrennte Beheizung mit dem Nachteil verbunden, dass eine Verbrennung des Brennstoffs mit reinem Sauerstoff nicht möglich ist, da ansonsten die Verbrennungstemperatur zu hoch wird und somit die in einem Trockenreformer maximal mögliche Verbrennungstemperatur überschritten wird. Daher muss immer ein wesentlicher Teil der Verbrennung zur Beheizung des Trockenreformers mit Luft erfolgen, so dass ein erheblicher Teil des in der Luft enthaltenen Stickstoffs mit aufgeheizt werden muss, was zusätzliche Energie erfordert.

Ausgehend davon lag der vorliegenden Erfindung die Aufgabe zugrunde, eine Anlage und ein Verfahren zur Herstellung von synthetischen Kraftstoffen bereitzustellen, welche(s) mit niedrigem Energiebedarf ohne Kohlendioxidemissionen oder, wenn überhaupt, mit minimalen Kohlendioxidemissionen betrieben werden kann, bei dem keine oder allenfalls geringe Mengen an aufzubereitenden Rauchgasen anfällt, welches nur eine geringe Menge an Frischwasserzufuhr benötigt; sowie mit geringfügigen Mengen an anfallendem Abwasser betrieben werden kann, und, welches dennoch zumindest nahezu ausschließlich mit elektrischer Energie und Biomasse betrieben werden kann.

Erfindungsgemäß wird diese Aufgabe gelöst durch eine Anlage gemäß dem Patentanspruch 1 und insbesondere durch eine Anlage zur Herstellung von synthetischen Kraftstoffen, insbesondere von Flugturbinenkraftstoff (Kerosin), Rohbenzin und/oder Diesel, welche umfasst:
a) eine Synthesegasherstellungseinrichtung zur Herstellung eines Kohlenmonoxid, Wasserstoff und Kohlendioxid umfassenden Rohsynthesegases aus i) Kohlendioxid, ii) Wasser, iii) Methan und/oder Wasserstoff und iv) Sauerstoff, wobei die Synthesegasherstellungseinrichtung mindestens einen autothermen Reformer umfasst, wobei der mindestens eine autotherme Reformer mindestens eine Zufuhrleitung i) für Kohlendioxid, ii) für Wasser, iii) für Methan und/oder für Wasserstoff und iv) für Sauerstoff sowie eine Abfuhrleitung für Rohsynthesegas umfasst,
b) eine Trenneinrichtung zur Abtrennung von Kohlendioxid aus dem in der Synthesegasherstellungseinrichtung hergestellten Rohsynthesegas mit einer Abfuhrleitung für Kohlendioxid und einer Abfuhrleitung für Synthesegas,
c) eine Fischer-Tropsch-Einrichtung zur Herstellung von Kohlenwasserstoffen durch ein Fischer-Tropsch-Verfahren aus dem Synthesegas, aus dem in der Trenneinrichtung Kohlendioxid abgetrennt wurde,
d) eine Raffinationseinrichtung zur Raffination der in der Fischer-Tropsch-Einrichtung hergestellten Kohlenwasserstoffe zu den synthetischen Kraftstoffen und
e₁) eine Elektrolyseeinrichtung zur Auftrennung von Wasser in Wasserstoff und Sauerstoff umfasst, wobei die Elektrolyseeinrichtung eine Wasserzufuhrleitung, eine Sauerstoff- oder Luftabfuhrleitung und eine Wasserstoffabfuhrleitung aufweist, und, wobei von der Sauerstoffabfuhrleitung die Zufuhrleitung für Sauerstoff in den mindestens einen autothermen Reformer und/oder von der Wasserstoffabfuhrleitung die Zufuhrleitung für Wasserstoff in den mindestens einen autothermen Reformer führt, und/oder
e₂) einen Methan-Dampfreformer umfasst, welcher mindestens eine Zufuhrleitung für Methan, für Wasser und für Wasserstoff sowie eine Abfuhrleitung für Rohsynthesegas umfasst, wobei die Abfuhrleitung für Rohsynthesegas in den mindestens einen autothermen Reformer führt oder die Anlage ferner eine Wasserstofftrenneinrichtung umfasst, in welche die Abfuhrleitung für Rohsynthesegas führt, wobei die Wasserstofftrenneinrichtung eine Abfuhrleitung für wasserstoff reduziertes Rohsynthesegas, welche in den mindestens einen autothermen Reformer führt, und eine Wasserstoffabfuhrleitung, welche in die Fischer-Tropsch-Einrichtung und/oder in die Raffinationseinrichtung führt, umfasst.

Indem zur Herstellung des Rohsynthesegases nicht, wie indem aus der WO 2022/223458 A1 bekannten Verfahren, ein Trockenreformer eingesetzt wird, sondern ein autothermer Reformer, dem vorzugsweise ein Pre-Reformer vorgeschaltet ist, entsteht bei der Rohsynthesegasherstellung kein Rauchgas mehr, dass durch Abtrennen und Wiederverwerten von Kohlendioxid regelungstechnisch komplex und teuer aufbereitet werden muss. Damit entfallen auch teure Rauchgasaufbereitungseinheiten, da das gesamte bei der Rohsynthesegasherstellung anfallende Kohlendioxid in dem Synthesegas enthalten ist und nur aus diesem abgetrennt werden muss. Dies liegt daran, dass der autotherme Reformer keine gesonderte externe Beheizung benötigt, da dieser - wie der Name sagt - autotherm arbeitet. Der Prozess des Reformierens von Kohlendioxid und Methan mittels Wasserdampf ist ein sehr stark endothermer Prozess, weswegen zur Aufrechterhaltung der Reaktion eine Wärmezufuhr erforderlich ist, um die zur Erzeugung von Synthesegas erforderliche Temperatur aufrecht erhalten zu können. Während die Wärmezufuhr in einem Trockenreformer auf indirektem Weg erfolgt, indem eine Vielzahl von mit Katalysator und Ausgangstoffen gefüllten senkrechten Metallrohren von außen durch Verbrennen von Brenngas, insbesondere Methan, vorrangig mit Luft beheizt wird, erfolgt die Beheizung des autothermen Reformers auf direktem Wege ausschließlich nur mit reinem Sauerstoff. Der autotherme Reformer ist - stark vereinfacht dargestellt - ein zylindrischer und mit einer wärmeisolierenden Ausmauerung versehener senkrechter Behälter, der an seinem oberen Ende mit einem Brenner bestückt ist. Die Mischung aus Ausgangstoffen zusammen mit einer definierten Sauerstoffmenge wird über den Brenner dem Reaktionsraum geführt, wobei die Sauerstoffzufuhr derart erfolgt, dass die für den Synthesegasherstellungsprozess notwendige Wärmezufuhr gewährleistet wird. Unterhalb des Brenners befindet sich in dem Behälterinneren eine Mischzone und daran anschließend eine Katalysatorschüttung. Der Synthesegasherstellungsprozess verläuft autotherm, also ohne zusätzliche Wärmezufuhr von außen. Wenn beispielsweise als Brenngas Methan und/oder Wasserstoff eingesetzt wird, wird ein Teil des in der Mischung aus Ausgangstoffen vorhandenen Methans und/oder Wasserstoffs mit dem ebenfalls zugeführten Sauerstoff unter Bildung von Wasser und im Falle von Methan von zusätzlichem Kohlendioxid umgesetzt und sorgt so für die erforderliche Wärmeerzeugung, während der restliche Teil des Methans und/oder Wasserstoffs als Edukt bei der Synthesegasherstellung agiert. Ein weiterer besonderer Vorteil des erfindungsgemäßen Einsatzes eines autothermen Reformers zur Rohsynthesegasherstellung ist es, dass dieser nicht, wie ein Trockenreformer, mit Luft oder mit Sauerstoff angereicherter Luft zur Aufrechterhaltung der in dem Trockenreformer benötigten Temperatur betrieben werden muss, sondern dass hierzu reiner Sauerstoff eingesetzt werden kann. Dies ist bei einem Trockenreformer nicht möglich, da mit Katalysator und Ausgangstoffen gefüllte Metallrohre des Trockenreformers den bei der Verbrennung mit (reinem) Sauerstoff entstehenden hohen Temperaturen von bis zu 3.000 °C nicht standhalten können. Hingegen ist bei einem mit einer Ausmauerung versehenen autothermen Reformer eine Überhitzung des Reformerbehälters auf Grund der Vermischung mit den Einsatzstoffen nicht möglich. Ein weiterer besonderer Vorteil des erfindungsgemäßen Einsatzes eines autothermer Reformers zur Rohsynthesegasherstellung ist es, dass dieser zwar mit Methan betrieben werden kann, aber nicht muss, weil nämlich der Anteil des eingesetzten Methans zu Gunsten des Kohlendioxideinsatzes von 100 % auf bis zu 0 % verringert werden kann, wenn in dem autothermen Reformer die notwendige Wärme durch die Umsetzung von Sauerstoff mit einem anderen Brenngas, wie Wasserstoff, erzeugt wird. Da gemäß der vorliegenden Erfindung der in dem autothermen Reformer eingesetzte Sauerstoff vorzugsweise durch Elektrolyse von Wasser erzeugt wird, bei der auch Wasserstoff anfällt, kann so der entstehende Wasserstoff zumindest teilweise in dem erfindungsgemäßen Verfahren eingesetzt werden. Alternativ kann der Sauerstoff auch separat, z.B. mittels Luftzerlegung gewonnen werden. Eine methangasarme oder gar methangasfreie Prozessführung ist unter Klimaschutzerwägungen vorteilhaft. Somit wird erfindungsgemäß vorzugsweise ein signifikanter Teil des zur Verbrennung des Brennstoffs in dem autothermen Reformer benötigten Sauerstoffs sowie auch der zur Einstellung des gewünschten Wasserstoff-zu-Kohlenmonoxid-Verhältnis in dem Rohsynthesegas benötigte Wasserstoff und/oder der zur Verbrennung mit Sauerstoff als Brenngas eingesetzte Wasserstoff allein durch elektrische Energie mittels Wasserelektrolyse hergestellt. Ferner ermöglicht es die erfindungsgemäße Anlage bei deren Betrieb sämtliches in dem Reaktionsprodukt der Synthesegasherstellungseinrichtung, d.h. in dem Rohsynthesegas, verbleibendes Kohlendioxid abzutrennen und direkt oder indirekt in die Synthesegasherstellungseinrichtung bzw. den autothermen Reformer zurückzuführen, so dass das gesamte Kohlendioxid in dem Prozess wiederverwertet und somit eine Kohlendioxidemission zuverlässig vermieden werden kann. Ein weiterer besonderer Vorteil der erfindungsgemäßen Anlage und des erfindungsgemäßen Verfahrens ist es, dass das für die Elektrolyse benötigte Wasser aus dem bei der Durchführung des erfindungsgemäßen Verfahrens in der erfindungsgemäßen Anlage anfallenden Abwasser erzeugt werden kann, wie dies weiter unten in Bezug auf besonders bevorzugte Ausführungsformen der vorliegenden Erfindung beschrieben wird, und dadurch auf den Einsatz von Frischwasser vollständig oder zumindest weitestgehend verzichtet werden kann. Abgesehen davon erlauben es die erfindungsgemäße Anlage und das erfindungsgemäße Verfahren, die Menge an ungenutzten Abgasen und Abwasser signifikant zu verringern, da die anfallenden Prozessgase und das Abwasser in den einzelnen Anlagenteilen, wie beispielsweise in dem Pre-Reformer, in der Elektrolyseeinrichtung und/oder in dem Methan-Dampfreformer, wiederverwendet werden können und werden. Als Methan wird insbesondere Biomethan oder aus grünen Einsatzstoffen hergestelltes synthetisches Methan eingesetzt und als elektrische Energie insbesondere Ökostrom. Alternativ zu Biomethan kann auch Methan aus jeder anderen Quelle eingesetzt werden und insbesondere jedes Methan enthaltende Gasgemisch, wie beispielsweise Biogas eingesetzt werden, welches vorzugsweise 30 bis 70 Vol.-% Methan und 70 bis 30 Vol.-% Kohlendioxid und besonders bevorzugt 40 bis 60 Vol.-% Methan und 60 bis 40 Vol.-% Kohlendioxid, wie etwa 50 Vol.-% Methan und etwa 50 Vol.-% Kohlendioxid, enthält. Mithin ist das erfindungsgemäße Verfahren ressourcenschonend, da natürliche und fossile Rohstoffe, wie Erdöl, Erdgas und dergleichen, nicht benötigt werden.

Erfindungsgemäß umfasst die Anlage mindestens einen autothermen Reformer als Synthesegasherstellungseinrichtung. Vorzugsweise besteht die Synthesegasherstellungseinrichtung aus einem autothermen Reformer mit den entsprechenden Zufuhr- und Abfuhrleitungen. Wie vorstehend dargelegt ist der autotherme Reformer vorzugsweise ein zylindrischer, vorzugsweise senkrechter und mit einer wärmeisolierenden feuerfesten Ausmauerung versehener Behälter, der in seinem oberen Bereich Zufuhrleitungen für Brenngas, wie Wasserstoff und/oder Methan, und für Sauerstoff aufweist, wobei in dessen oberen Innenbereich ein Brenner vorgesehen ist und in dessen unteren Innenbereich Katalysator vorgesehen ist. Dabei enthält der autotherme Reformer im Unterschied zu einem Trockenreformer keine Metallrohre, welche einen Trockenreformer in einen außerhalb der Metallrohre vorliegenden Wärmeerzeugungsabschnitt und einen in den Metallrohren vorliegenden Reaktionsabschnitt unterteilen. Konkret ist der autotherme Reformer in eine Gaseinlasszone mit dem zentrisch angeordneten Brenner, in eine nachfolgende Verbrennungszone ohne Katalysator und in eine Reaktorzone mit einem dünnen als Wärmeschutzschild dienenden Bett bevorzugt aus Aluminiumoxidringen, einem nachfolgenden dünnen als Katalysator dienenden Bett bevorzugt aus robustem Nickel-basiertem Katalysatorringen, sowie einem darunterliegenden als Katalysator dienenden Hauptbett bevorzugt aus hochaktiven Nickel-basierten Reforming-Katalysatorringen unterteilt. Die Ausmauerung an der Reformerwand besteht üblicherweise aus einem Verbund an Formsteinen aus hochreinem Aluminiumoxid (enthaltend mehr als 96 % Al₂O₃) für die Reformerwand und einer darunterliegenden Isolierlage aus Aluminiumoxid (Al₂O₃) und Calciumoxid (CaO).

Gemäß einer ganz besonders bevorzugten Ausführungsform der vorliegenden Erfindung umfasst die Anlage ferner einen dem autothermen Reformer vorgeschalteten Pre-Reformer. Vorzugsweise weist der Pre-Reformer mindestens eine Zufuhrleitung für Wasser(dampf), für Brennstoff und optional für Methan sowie eine Abfuhrleitung auf, welche in den mindestens einen autothermen Reformer führt. Dies ermöglicht es, wie weiter unten beschrieben, in der Anlage bei deren Betrieb und insbesondere in der Fischer-Tropsch-Einrichtung und/oder in der Raffinationseinrichtung erzeugte Prozessgase und/oder synthetischen Treibstoff in der Anlage zu dem autothermen Reformer zu recyclen und dort umzusetzen. Der Einsatz eines Pre-Reformers im Falle der Nutzung von bei dem Betrieb der Anlage anfallenden Prozessgasen und/oder synthetischem Treibstoff ist deshalb vorteilhaft, weil insbesondere in den Prozessgasen höhere Kohlenwasserstoffverbindungen, wie C₂-₂₀-Kohlenwasserstoffverbindungen und insbesondere C₂-Kohlenwasserstoffverbindungen, enthalten sind, die in dem autothermen Reformer zu unerwünschten Nebenprodukten, wie Koks und Ruß führen und eine Deaktivierung des Katalysators verursachen können. Um dies zu verhindern, werden die Prozessgase und/oder synthetischen Treibstoffe bevorzugt vor deren Rückführung in den autothermen Reformer in dem Pre-Reformer bei erhöhter Temperatur mit Wasserdampf behandelt, um die höheren Kohlenwasserstoffverbindungen vorwiegend zu Methan umzusetzen. Vorzugsweise ist der Pre-Reformer bei einem Druck von 10 bis 50 bar und einer Temperatur von 100 bis 400 °C und besonders bevorzugt bei einem Druck von 20 bis 30 bar und einer Temperatur von 200 bis 300 °C betreibbar. Üblicherweise besteht der Pre-Reformer aus einem senkrechten zylindrischen Behälter mit einer Schüttung aus Nickel-basiertem Katalysatorringen.

Erfindungsgemäß ist die Trenneinrichtung b) zur Abtrennung von Kohlendioxid aus dem in der Synthesegasherstellungseinrichtung hergestellten Rohsynthesegas ausgestaltet, ist die Fischer-Tropsch-Einrichtung c) zur Herstellung von Kohlenwasserstoffen durch ein Fischer-Tropsch-Verfahren aus dem Synthesegas, aus dem in der Trenneinrichtung b) Kohlendioxid abgetrennt wurde, ausgestaltet, und ist die Raffinationseinrichtung d) zur Raffination der in der Fischer-Tropsch-Einrichtung c) hergestellten Kohlenwasserstoffe zu den synthetischen Kraftstoffen ausgestaltet. Das heißt, die Trenneinrichtung b) zur Abtrennung von Kohlendioxid ist mit der Synthesegasherstellungseinrichtung a) bzw. mit dem autothermen Reformer über die Abfuhrleitung für Rohsynthesegas der Synthesegasherstellungseinrichtung a) verbunden, die Fischer-Tropsch-Einrichtung c) zur Herstellung von Kohlenwasserstoffen durch ein Fischer-Tropsch-Verfahren ist mit der Trenneinrichtung b) über eine Zufuhrleitung für Synthesegas verbunden und die Raffinationseinrichtung d) ist mit der Fischer-Tropsch-Einrichtung c) über eine Zufuhrleitung für Kohlenwasserstoffe verbunden.

Wie vorstehend dargelegt, ist es erfindungsgemäß möglich, bei dem Betrieb der erfindungsgemäßen Anlage sämtliches in dem Rohsynthesegas verbleibendes Kohlendioxid abzutrennen und direkt oder indirekt in die Synthesegasherstellungseinrichtung zurückzuführen, so dass das gesamte Kohlendioxid in dem Prozess wiederverwertet und somit eine Kohlendioxidemission zuverlässig vermieden werden kann. Daher ist es gemäß der vorliegenden Erfindung ganz besonders bevorzugt, dass die Anlage keine Kohlendioxidabfuhrleitung aufweist bzw. beim Betrieb der Anlage kein Kohlendioxid abgeführt wird. Das erfindungsgemäße Verfahren weist mithin ganz besonders bevorzugt eine komplett neutrale Kohlendioxid-Bilanz auf.

Ein wesentlicher Bestandteil der erfindungsgemäßen Anlage ist die mindestens einen autothermen Reformer umfassende Synthesegasherstellungseinrichtung b) zur Herstellung eines Kohlenmonoxid, Wasserstoff und Kohlendioxid umfassenden Rohsynthesegases aus i) Kohlendioxid, ii) Wasser, iii) Methan und/oder Wasserstoff und iv) Sauerstoff. Herstellung eines Kohlenmonoxid, Wasserstoff und Kohlendioxid umfassenden Rohsynthesegases aus i) Kohlendioxid, ii) Wasser, iii) Methan und/oder Wasserstoff und iv) Sauerstoff heißt in diesem Zusammenhang, dass die Ausgangsgasmischung i) Kohlendioxid, ii) Wasser, iii) Methan und/oder Wasserstoff und iv) Sauerstoff enthält, aber zusätzlich weitere Bestandteile enthalten kann. Insbesondere kann als Methanquelle Biogas eingesetzt werden, welches 30 bis 70 Vol.-% Methan und 70 bis 30 Vol.-% Kohlendioxid und bevorzugt 40 bis 60 Vol.-% Methan und 60 bis 40 Vol.-% Kohlendioxid, wie etwa 50 Vol.-% Methan und etwa 50 Vol.-% Kohlendioxid, enthält. Die Zufuhrleitung für Methan bezeichnet demnach eine Zufuhrleitung für ein Methan enthaltendes Gas, welches beispielsweise Biogas oder auch reines Methan sein kann.

In Weiterbildung des Erfindungsgedankens wird es vorgeschlagen, dass die Anlage eine Elektrolyseeinrichtung e₁) umfasst, wobei der mindestens eine autotherme Reformer eine Wasserstoffzufuhrleitung umfasst, welche von der Wasserstoffabfuhrleitung der Elektrolyseeinrichtung zu dem autothermen Reformer bzw. der Synthesegasherstellungseinrichtung führt. So kann zumindest ein Teil des bei der Elektrolyse erzeugten Wasserstoffs als Brenngas für den autothermen Reformer und/oder zur Einstellung des optimalen H₂/CO-Molverhältnis in dem Rohsynthesegas verwendet werden. Aus diesem Grund ist es bei dieser Ausführungsform auch bevorzugt, dass die Anlage eine Steuereinrichtung umfasst, welche die in den autothermen Reformer geleitete Wasserstoffmenge so steuert, dass das H₂/CO-Molverhältnis in dem in dem autothermen Reformer erzeugten Rohsynthesegas 1,30 bis 1,85 und bevorzugt 1,35 bis 1,80, wie 1,35, 1,60 oder 1,80, beträgt. Typischerweise arbeitet der autotherme Reformer mit einem H₂/CO-Molverhältnis von ungefähr 1,60. Mit zunehmenden H₂/CO-Molverhältnissen nimmt jedoch der Kohlendioxidbedarf des autothermen Reformers ab.

Vorzugsweise enthält der autotherme Reformer einen Nickel-basierten Katalysator und ist bei einem Druck von 10 bis 50 bar und einer Temperatur von 700 bis 1.200 °C und bevorzugt bei einem Druck von 20 bis 30 bar und einer Temperatur von 900 bis 1.000 °C betreibbar.

Gemäß einer weiteren besonders bevorzugten Ausführungsform der vorliegenden Erfindung ist es vorgesehen, bei dem Betrieb der Anlage anfallendes Prozessgas soweit wie möglich als Brennstoff für den autothermen Reformer zu nutzen. Daher ist es bevorzugt, wenn die Fischer-Tropsch-Einrichtung und/oder die Raffinationseinrichtung eine Gasabfuhrleitung aufweisen, welche indirekt mit dem autothermen Reformer verbunden sind. Da die in der Fischer-Tropsch-Einrichtung bzw. in der Raffinationseinrichtung anfallenden Prozessgase, wie vorstehend dargelegt, höher Kohlenwasserstoffe enthalten, ist es bevorzugt, dass die Fischer-Tropsch-Einrichtung und/oder die Raffinationseinrichtung eine Gasabfuhrleitung aufweisen, welche mit einer in den bevorzugten Pre-Reformer führenden Zufuhrleitung für Brennstoff verbunden ist/sind, so dass bei dem Betrieb der Anlage diese Prozessgase zunächst in dem Pre-Reformer so umgesetzt werden, dass höhere Kohlenwasserstoffe, also C₂₊-Kohlenwasserstoffe, zu Methan umgesetzt werden, bevor die so modifizierten Prozessgase aus dem Pre-Reformer in den autothermen Reformer geleitet werden. Besonders bevorzugt weist die Fischer-Tropsch-Einrichtung eine Gasabfuhrleitung und weist die Raffinationseinrichtung eine Gasabfuhrleitung auf, wobei beide Gasabfuhrleitungen über eine Zufuhrleitung für Brennstoff in den bevorzugten Pre-Reformer führen.

In Weiterbildung des Erfindungsgedankens wird es vorgeschlagen, dass die Anlage ferner eine Verdampfungseinrichtung umfasst und die Fischer-Tropsch-Einrichtung eine Prozesswasserabfuhrleitung aufweist, die mit der Verdampfungseinrichtung verbunden ist, wobei die Verdampfungseinrichtung zudem eine Abfuhrleitung für Wasser(dampf) aufweist, welche mit der Zufuhrleitung für Wasser(dampf) des autothermen Reformers oder bevorzugt mit der Zufuhrleitung für Wasser(dampf) des bevorzugten Pre-Reformers verbunden ist. Die Formulierung Wasser(dampf) wird hier verwendet, um jegliche gasförmiges Wasser ggf. in Mischung mit flüssigem Wasser, wie reines gasförmiges Wasser oder eine Dispersion von Wasserstropfen in gasförmigem Wasser, zu umfassen. Bei dieser Ausführungsform wird der in dem bevorzugten Pre-Reformer benötigte Wasser(dampf) aus Prozesswasser generiert, was den Frischwasserbedarf der Anlage vorzugsweise auf null reduziert.

Zudem ist es bevorzugt, dass die Raffinationseinrichtung ein oder mehrere Produktabfuhrleitungen für synthetische Kraftstoffe aufweist, wobei wenigstens eine der ein oder mehreren Produktabfuhrleitungen für synthetische Kraftstoffe über eine Rückführleitung einer Zufuhrleitung des autothermen Reformers und bevorzugt mit der in den bevorzugten Pre-Reformer führenden Zufuhrleitung für Brennstoff verbunden ist, so dass ein Teil des in der Raffinationseinrichtung erzeugten synthetischen Kraftstoffs, wie insbesondere Leichtbenzin, als Brennstoff direkt oder indirekt über den bevorzugten Pre-Reformer in den autothermen Reformer geleitet werden kann. Somit kann, wenn die in der Fischer-Tropsch-Einrichtung und in der Raffinationseinrichtung erzeugten Abgase bzw. Prozessgase in der Summe nicht genügend Brennwert aufweisen, um bei deren Verbrennung die für den Betrieb des autothermen Reformers benötige Wärme zu erzeugen, die benötigte Restmenge an Energie bzw. Wärme durch Zuleiten einer entsprechenden Menge von in der Anlage produziertem synthetischem Kraftstoff, wie insbesondere Leichtbenzin, erzeugt werden, um so auf die Zuführung externen Brennstoffs, soweit wie erwünscht, verzichten zu können.

Beispielsweise kann die Raffinationseinrichtung eine Produktabfuhrleitung für Kerosin (Sustainable Aviation Fuel, SAF), eine Produktabfuhrleitung für Rohbenzin und eine Produktabfuhrleitung für Leichtbenzin aufweisen, wobei die Rückführleitung von einer oder mehreren dieser Produktabfuhrleitungen und bevorzugt der Produktabfuhrleitung für Leichtbenzin in die in den bevorzugten Pre-Reformer führende Zufuhrleitung für Brennstoff führt.

Gemäß einer weiteren bevorzugten Ausführungsform der vorliegenden Erfindung ist es vorgesehen, dass die Anlage eine Steuereinrichtung umfasst, welche die Menge von in den autothermen Reformer oder bevorzugt in den bevorzugten Pre-Reformer als Brennstoff geleiteten synthetischen Kraftstoff so steuert, dass dem Pre-Reformer sowie dem mindestens einen autothermen Reformer und bevorzugt der gesamten Anlage so wenig wie möglich externer Brennstoff, wie Methan oder Wasserstoff, zugeführt werden muss.

Für den in der Raffinationseinrichtung vorzugsweise enthaltenen Iso-Hydrocracker-Reaktor und für den darin vorzugsweise ebenfalls enthaltenen Wasserstoffstripper wird Wasserstoff benötigt. Hierfür wird es in Weiterbildung des Erfindungsgedankens vorgeschlagen, dass die Anlage eine Elektrolyseeinrichtung e₁) umfasst und für den in der Raffinationseinrichtung vorzugsweise enthaltenen Iso-Hydrocracker-Reaktor und für den darin vorzugsweise ebenfalls enthaltenen Wasserstoffstripper in der Elektrolyseeinrichtung erzeugter Wasserstoff eingesetzt wird. Vorzugsweise führt daher von der Wasserstoffabfuhrleitung der Elektrolyseeinrichtung eine Leitung zu der Fischer-Tropsch-Einrichtung und/oder eine Leitung zu der Raffinationseinrichtung. Bevorzugt führt von der Wasserstoffabfuhrleitung der Elektrolyseeinrichtung eine Leitung zu der Fischer-Tropsch-Einrichtung und eine Leitung zu der Raffinationseinrichtung und bevorzugt auch eine Leitung zu einer bevorzugt in der Anlage enthaltenen Synthesegasverdichtungseinrichtung.

Vorzugsweise umfasst die Elektrolyseeinrichtung e₁) eine oder mehrere Festoxid-Elektrolysezellen (SOEC), eine oder mehrere Polymerelektrolytmembran-Elektrolysezellen (PEM), eine oder mehrere Alkali-Elektrolysezellen (AEL) und/oder eine oder mehrere Elektrolysezellen eines anderen Elektrolyseverfahrens, wie beispielsweise das Anionen-Exchange-Membran-Verfahren (AEM). Beispielsweise erfolgt die Wasserstoffproduktion durch eine alkalische Niedertemperatur-Hochdruck-Wasserelektrolyse.

Gemäß einer besonders bevorzugten Ausführungsform der vorliegenden Erfindung umfasst die Anlage eine oder mehrere Polymerelektrolytmembran-Elektrolysezellen (PEM) und/oder eine oder mehrere Alkali-Elektrolysezellen (AEL) umfassende Elektrolyseeinrichtung e₁), wobei die Sauerstoffabfuhrleitung der Elektrolyseeinrichtung mit der Zufuhrleitung für Sauerstoff des mindestens einen autothermen Reformers und/oder die Wasserstoffabfuhrleitung der Elektrolyseeinrichtung mit der Zufuhrleitung für Wasserstoff des mindestens einen autothermen Reformers verbunden ist und besonders bevorzugt sowohl die Sauerstoffabfuhrleitung der Elektrolyseeinrichtung mit der Zufuhrleitung für Sauerstoff des mindestens einen autothermen Reformers verbunden ist als auch die Wasserstoffabfuhrleitung der Elektrolyseeinrichtung mit der Zufuhrleitung für Wasserstoff des mindestens einen autothermen Reformers verbunden ist.

In einer dazu alternativen Ausführungsform der vorliegenden Erfindung ist es vorgesehen, dass die Anlage eine oder mehrere Festoxid-Elektrolysezellen (SOEC) umfassende Elektrolyseeinrichtung e₁) aufweist, wobei die Wasserstoffabfuhrleitung der Elektrolyseeinrichtung mit der Zufuhrleitung für Wasserstoff des mindestens einen autothermen Reformers verbunden ist. SOEC's sind sehr effiziente Elektrolysezellen, weisen aber den Nachteil, dass diesen Luft zugeführt werden muss, also die Elektrolyseeinrichtung neben einer Wasserzufuhrleitung auch eine Luftzufuhrleitung aufweist, und der in der Elektrolyseeinrichtung produzierte Sauerstoff somit nur mit Luft vermischt anfällt. Da der autotherme Reformer bevorzugt mit reinem Sauerstoff betrieben wird, ist es bei dieser Ausführungsform der vorliegenden Erfindung bevorzugt, die in der Elektrolyseeinrichtung anfallende Luft nicht in den autothermen Reformer zu führen, sondern dem autothermen Reformer über eine Zufuhrleitung (reinen) Sauerstoff von einer externen Quelle zuzuführen.

In Weiterbildung des Erfindungsgedankens wird vorgeschlagen, dass die Anlage sowohl eine Elektrolyseeinrichtung e₁) als auch einen Methan-Dampfreformer e₂) umfasst. Vorzugsweise umfasst die Elektrolyseeinrichtung e₁) dieser Ausführungsform eine oder mehrere Polymerelektrolytmembran-Elektrolysezellen (PEM) und/oder eine oder mehrere Alkali-Elektrolysezellen (AEL). Zudem ist es bei dieser Ausführungsform bevorzugt, dass die Sauerstoffabfuhrleitung der Elektrolyseeinrichtung mit der Zufuhrleitung für Sauerstoff des mindestens einen autothermen Reformers verbunden ist, so dass bei dem Betrieb der Anlage der bei der Elektrolyse erzeugte Sauerstoff in dem autothermen Reformer zur Verbrennung des Brennstoffs verwendet wird. Der Methan-Dampfreformer fungiert als zweite Synthesegasherstellungseinrichtung zur Herstellung eines Wasserstoff und Kohlenmonoxid umfassenden Rohsynthesegases aus Wasserstoff, Methan und Wasser. Der Methan-Dampfreformer ist vorzugsweise zu der den mindestens einen autothermen Reformer umfassenden (ersten) Synthesegasherstellungseinrichtung parallelgeschaltet, wobei die in den beiden Synthesegasherstellungseinrichtungen erzeugten Rohsynthesegase miteinander vermischt werden können, bevor die so erzeugte Rohsynthesegasmischung der Trenneinrichtung zur Abtrennung von Kohlendioxid aus dem Rohsynthesegas zugeführt wird. Alternativ dazu ist es auch möglich, die in dem autothermen Reformer der (ersten) Synthesegasherstellungseinrichtung erzeugte Rohsynthesegasmischung der Trenneinrichtung zur Abtrennung von Kohlendioxid aus dem Rohsynthesegas zuzuführen, wohingegen die in dem Methan-Dampfreformer der zweiten Synthesegasherstellungseinrichtung erzeugte Rohsynthesegasmischung dem autothermen Reformer der (ersten) Synthesegasherstellungseinrichtung zugeführt wird. Ein Vorteil dieser Ausführungsform ist es, dass der Methan-Dampfreformer Rohsynthesegas mit einem höheren H₂/CO-Molverhältnis erzeugt als der autotherme Reformer, so dass bei dieser Ausführungsform mit dem kombinierten Einsatz eines autothermen Reformers und eines Methan-Dampfreformers weniger Wasserstoff bzw. kein Wasserstoff zur Einstellung des gewünschten H₂/CO-Molverhältnisses in dem der Trenneinrichtung zugeführten Rohsynthesegas benötigt wird als bei dem alleinigen Einsatz des autothermen Reformers. Vorzugsweise weist der Methan-Dampfreformer eine Methanzufuhrleitung, eine Wasser(dampf)zufuhrleitung, optional eine Wasserstoffzufuhrleitung, eine Abfuhrleitung für Rohsynthesegas sowie eine Abfuhrleitung für Wasser auf, wobei die Abfuhrleitung für Rohsynthesegas mit einer Zufuhrleitung des autothermen Reformers verbunden ist und die optionale Wasserstoffzufuhrleitung, wenn vorhanden, bevorzugt mit der Wasserstoffabfuhrleitung der Elektrolyseeinrichtung verbunden ist. Vorzugsweise ist der Methan-Dampfreformer allein mittels Induktion komplett elektrisch beheizt, d.h. durch die induktive Beheizung des Methan-Dampfreformers wird kein Kohlendioxid emittiert. Bevorzugt ist der Methan-Dampfreformer bei niedrigen bis moderaten Drücken von 1 bis 20 bar, wie 10 bis 15 bar, und Reaktionstemperaturen von bis zu 1.500 °C, wie 1.000 bis 1.200 °C, betreibbar, um eine hohe Ausbeute an Synthesegas (H₂/CO) bei möglichst niedrigem Kohlendioxidgehalt zu erreichen. Die Kohlendioxidmengen aus dem Rohsynthesegas des autothermen Reformers und aus dem Prozess des Methan-Dampfreformers werden vorzugsweise komplett dem autothermen Reformer wieder zugeführt, so dass ein komplett Kohlendioxid-emissionsfreier Anlagenbetrieb möglich ist. Um diese Kohlendioxidmengen aufzunehmen und um ein möglichst optimales H₂/CO-Molverhältnis von etwa 2 vor der Fischer-Tropsch-Synthese zu realisieren, wird vorzugsweise ein Molverhältnis zwischen dem autothermen Reformer und dem Methan-Dampfreformer von 30 bis 60% zu 40 bis 65%, bezogen auf den Methaneinsatz, ein H₂/CO-Molverhältnis in dem in dem autothermen Reformer erzeugten Rohsynthesegas von 1,30 bis 1,85 und bevorzugt von 1,35 bis 1,80, wie 1,60, und ein H₂/CO-Molverhältnis in dem in dem Methan-Dampfreformer erzeugten Rohsynthesegas von 2,50 bis 3,50, wie 3,00 eingestellt. Die Einstellung des Verhältnisses zwischen dem autothermen Reformer und dem Methan-Dampfreformer erfolgt vorzugsweise über die dem Methan-Dampfreformer zugefügte Methanmenge, wobei die Einstellung des H₂/CO-Molverhältnisses bei dem autothermen Reformer ebenfalls über die zugeführte Methanmenge und des H₂/CO-Molverhältnisses bei dem Methan-Dampfreformer über die zugeführte Dampfmenge erfolgt.

Gemäß einer dazu alternativen Ausführungsform der vorliegenden Erfindung ist es vorgesehen, dass die Anlage einen Methan-Dampfreformer e₂) umfasst, aber anstelle einer Elektrolyseeinrichtung eine mit dem Methan-Dampfreformer über eine Leitung verbundene Wasserstofftrenneinrichtung umfasst. Bei dieser Ausführungsform führt vorzugsweise von der Wasserstofftrenneinrichtung eine Abfuhrleitung für wasserstoff reduziertes Rohsynthesegas in eine Zufuhrleitung des autothermen Reformers. Zudem ist es bevorzugt, dass bei dieser Ausführungsform eine Wasserstoffabfuhrleitung der Wasserstofftrenneinrichtung in die Fischer-Tropsch-Einrichtung und/oder eine Wasserstoffabfuhrleitung in die Raffinationseinrichtung führt und besonders bevorzugt sowohl eine Wasserstoffabfuhrleitung der Wasserstofftrenneinrichtung in die Fischer-Tropsch-Einrichtung als auch eine Wasserstoffabfuhrleitung in die Raffinationseinrichtung führt. Ferner ist es bei dieser Ausführungsform bevorzugt, dass eine Wasserstoffabfuhrleitung der Wasserstofftrenneinrichtung in den Methan-Dampfreformer und/oder eine Wasserstoffabfuhrleitung in den bevorzugten Pre-Reformer führt und besonders bevorzugt sowohl eine Wasserstoffabfuhrleitung der Wasserstofftrenneinrichtung in den Methan-Dampfreformer als auch eine Wasserstoffabfuhrleitung in den bevorzugten Pre-Reformer führt. Bei dem Betrieb der Anlage dieser Ausführungsform der vorliegenden Erfindung wird die in dem Methan-Dampfreformer der zweiten Synthesegasherstellungseinrichtung erzeugte Rohsynthesegasmischung über eine Zufuhrleitung der Wasserstofftrenneinrichtung, die vorzugsweise als Membrantrenneinrichtung ausgestaltet ist, zugeführt, um diese Rohsynthesegasmischung in Wasserstoff und wasserstoffreduziertes Rohsyntheserestgas zu trennen. Bevorzugt wird das so erhaltene wasserstoffreduzierte Rohsyntheserestgas in den autothermen Reformer geführt, wohingegen der abgetrennte Wasserstoff in ein oder mehrere der Fischer-Tropsch-Einrichtung, der Raffinationseinrichtung, dem Methan-Dampfreformer oder dem Pre-Reformer geführt wird. Zudem kann ein Teil des in der Wasserstofftrenneinrichtung abgetrennten Wasserstoffs in die bevorzugt vorhandene Synthesegasverdichtungseinheit zugeführt werden. In diesem Fall führt von der Wasserstofftrenneinrichtung eine Wasserstoffabfuhrleitung auch in die Synthesegasverdichtungseinheit. Auch diese Ausführungsform weist dem Vorteil auf, dass der Methan-Dampfreformer Rohsynthesegas mit einem höheren H₂/CO-Molverhältnis erzeugt als der autotherme Reformer. Mithin weist die Rohsynthesegasmischung aus dem in dem autothermen Reformer erzeugten Rohsynthesegas und dem in dem Methan-Dampfreformer erzeugten Rohsynthesegas ein höheres H₂/CO-Molverhältnis als das in dem autothermen Reformer erzeugte Rohsynthesegas auf, so dass bei dieser Ausführungsform mit dem kombinierten Einsatz eines autothermen Reformers und eines Methan-Dampfreformers weniger Wasserstoff bzw. kein Wasserstoff zur Einstellung des gewünschten H₂/CO-Molverhältnisses in dem der Trenneinrichtung zugeführten Rohsynthesegas benötigt wird als bei dem alleinigen Einsatz des autothermen Reformers. Die in dem autothermen Reformer benötigte Sauerstoffmenge wird dann nicht mit einer Elektrolyse, sondern mit einem alternativen Prozess hergestellt, wie beispielsweise mit einer Luftzerlegungsanlage. Auch bei dieser Ausführungsform weist der Methan-Dampfreformer vorzugsweise eine Wasserstoffzufuhrleitung, eine Methanzufuhrleitung, eine Wasser(dampf)zufuhrleitung, eine Abfuhrleitung für Rohsynthesegas sowie eine Abfuhrleitung für Wasser auf, wobei die Wasserstoffzufuhrleitung bevorzugt mit der Wasserstoffabfuhrleitung der bevorzugt als Membrantrenneinrichtung ausgebildeten Wasserstofftrenneinheit verbunden ist. Vorzugsweise ist auch der Methan-Dampfreformer dieser Ausführungsform allein mittels Induktion komplett elektrisch beheizt, d.h. durch die induktive Beheizung des Methan-Dampfreformers wird kein Kohlendioxid emittiert. Bevorzugt ist der Methan-Dampfreformer auch bei dieser Ausführungsform bei niedrigen bis moderaten Drücken von 1 bis 20 bar, wie 10 bis 15 bar, und Reaktionstemperaturen von bis zu 1.500 °C, wie 1.000 bis 1.200 °C, betreibbar, um eine hohe Ausbeute an Synthesegas (H₂/CO) bei möglichst niedrigem Kohlendioxidgehalt zu erreichen. Die Kohlendioxidmengen aus dem Rohsynthesegas des autothermen Reformers und aus dem Prozess des Methan-Dampfreformers werden vorzugsweise komplett dem autothermen Reformer wieder zugeführt, so dass ein komplett kohlendioxidemissionsfreier Anlagenbetrieb möglich ist. Um diese Kohlendioxidmengen aufzunehmen und um ein möglichst optimales H₂/CO-Molverhältnis von etwa 2 vor der Fischer-Tropsch-Synthese zu realisieren, wird vorzugsweise ein Verhältnis zwischen dem autothermen Reformer und dem Methan-Dampfreformer von 30 bis 60% zu 40 bis 65%, bezogen auf den Methaneinsatz, ein H₂/CO-Molverhältnis in dem in dem autothermen Reformer erzeugten Rohsynthesegas von 1,30 bis 1,60 und bevorzugt von 1,30 bis 1,40, wie 1,35, und ein H₂/CO-Molverhältnis in dem in dem Methan-Dampfreformer erzeugten Rohsynthesegas von 2,50 bis 3,50, wie 3,00 eingestellt. Die Einstellung des Verhältnisses zwischen dem autothermen Reformer und dem Methan-Dampfreformer erfolgt vorzugsweise über die dem Methan-Dampfreformer zugefügte Methanmenge, wobei die Einstellung des H₂/CO-Molverhältnisses bei dem autothermen Reformer ebenfalls über die zugeführte Methanmenge und des H₂/CO-Molverhältnisses bei dem Methan-Dampfreformer über die zugeführte Dampfmenge erfolgt.

Gemäß einer besonders bevorzugten Ausführungsform der vorliegenden Erfindung ist es vorgesehen, dass die Anlage eine Wasservollentsalzungseinrichtung umfasst, in der Frischwasser und/oder in der Anlage erzeugte Kondensate, sowie aufbereitetes Prozesswasser so entsalzt und entgast wird, dass das erzeugte Wasser eine für eine Elektrolyse von Wasser ausreichend hohe Reinheit aufweist. Mithin umfasst die Wasservollentsalzungseinrichtung vorzugsweise eine Frischwasserzufuhrleitung und/oder besonders bevorzugt eine Zufuhrleitung von in der Anlage aufbereitetem Prozesswasser, welches besonders bevorzugt zuvor von Kohlenwasserstoffen gereinigt wurde, sowie eine Abfuhrleitung für entsalztes Wasser, wobei, wenn die Anlage eine Elektrolyseeinrichtung e₁) umfasst, die Abfuhrleitung für entsalztes Wasser mit der Wasserzufuhrleitung der Elektrolyseeinrichtung verbunden ist. Besonders bevorzugt wird das gesamte Frischwasser bzw. das gesamte oder zumindest nahezu gesamte, d.h. vorzugsweise mehr als 50 Gew.-%, besonders bevorzugt mehr als 80 Gew.-%, ganz besonders bevorzugt mehr als 90 Gew.-% und höchst bevorzugt das gesamte in der Anlage erzeugte Prozesswasser, welches besonders bevorzugt zuvor gereinigt wurde, der Wasserentsalzungseinrichtung zugeführt. Gute Ergebnisse werden insbesondere erzielt, wenn die Entsalzungseinrichtung so ausgestaltet ist, dass das zugeführte Frischwasser und/oder bevorzugt zugeführte Prozesswasser soweit entsalzt und entgast wird, dass dessen Leitfähigkeit weniger als 20 µS/cm, bevorzugt weniger als 10 µS/cm, besonders bevorzugt weniger als 5 µS/cm und höchst bevorzugt maximal 2 µS/cm beträgt. Zu diesem Zweck weist die Vollentsalzungseinrichtung vorzugsweise ein oder mehrere An- und Kationenaustauscher sowie eine Membraneinrichtung zur Entgasung auf. Während der Entgasung wird Kohlendioxid und Sauerstoff aus dem Wasser abgetrennt. Die Regeneration der An- und Kationentauscher erfolgt vorzugsweise mit Hilfe von Natronlauge bzw. Salzsäure. Das entstehende Abwasser hat in etwa die 6-fache lonenkonzentration des Wassers vor der Zuführung in die Entsalzungseinrichtung und kann auf Grund einer gleichzeitigen Regeneration des An- und Kationentauschers als neutrales Abwasser zu einer kommunalen Abwasseranlage geführt werden.

In Weiterbildung des Erfindungsgedankens wird vorgeschlagen, dass die Anlage eine Wasserreinigungseinrichtung umfasst, in welcher in der Anlage anfallendes Prozesswasser so gereinigt wird, dass es im Kreislauf geführt werden kann. Dadurch wird der Frischwasserbedarf der Anlage auf ein Minimum oder auf null verringert. Vorzugsweise weist die Anlage in dieser Ausführungsform eine von der Raffinationseinrichtung zu der Wasserreinigungseinrichtung führende Prozesswasserzufuhrleitung und/oder eine von dem autothermen Reformer zu der Wasserreinigungseinrichtung führende Prozesswasserzufuhrleitung und/oder eine von der Kohlendioxidverdichtungseinrichtung zu der Wasserreinigungseinrichtung führende Prozesswasserzufuhrleitung jeweils zur Reinigung von darin anfallendem Prozesswasser auf. Bevorzugt weist die Anlage in dieser Ausführungsform eine von der Raffinationseinrichtung zu der Wasserreinigungseinrichtung führende Prozesswasserzufuhrleitung und eine von dem autothermen Reformer zu der Wasserreinigungseinrichtung führende Prozesswasserzufuhrleitung und vorzugsweise auch eine von der Kohlendioxidverdichtungseinrichtung zu der Wasserreinigungseinrichtung führende Prozesswasserzufuhrleitung jeweils zur Reinigung von darin anfallendem Prozesswasser auf. Zudem ist es bevorzugt, dass die Wasserreinigungseinrichtung über eine Leitung mit der Wasservollentsalzungseinrichtung verbunden ist, so dass in der Wasserreinigungseinrichtung gereinigtes Prozesswasser in die Wasservollentsalzungseinrichtung geleitet werden kann.

Die Wasserreinigungseinrichtung kann beispielsweise eine oder mehrere Dampfstrippereinheiten aufweisen, in der durch Dampfstrippung wenigstens 95% aller Kohlenwasserstoffe abgetrennt werden können.

Gemäß einer besonders bevorzugten Ausführungsform der vorliegenden Erfindung umfasst die Wasserreinigungseinrichtung einen anaeroben Reaktor. In einem anaeroben Wasserreinigungsreaktor wird das zu reinigende Wasser mit anaeroben Mikroorganismen kontaktiert, welche die in dem Wasser enthaltenen organischen Verunreinigungen vorwiegend zu Kohlendioxid und Methan abbauen. Im Gegensatz zu einer aeroben Wasserreinigung, muss bei der anaeroben Wasserreinigung nicht unter hohem Energieaufwand Sauerstoff in den Bioreaktor eingeführt werden. Je nach der Art und Form der eingesetzten Biomasse werden die Reaktoren für die anaerobe Wasserreinigung in Kontaktschlammreaktoren, UASB-Reaktoren, EGSB-Reaktoren, Festbettreaktoren und Fließbettreaktoren unterteilt. Während die Mikroorganismen bei Festbettreaktoren an ortsfesten Trägermaterialen und die Mikroorganismen bei Fließbettreaktoren auf frei beweglichen, kleinem Trägermaterial anhaften, werden die Mikroorganismen bei den UASB- und EGSB-Reaktoren in Form so genannter Pellets eingesetzt. Ein besonderer Vorteil des Einsatzes eines anaeroben Reaktors als Wasserreinigungseinrichtung in der erfindungsgemäßen Anlage liegt darin, dass das Prozesswasser aus der Fischer Tropsch-Synthese verschiedenste Kohlenwasserstoffe enthält, wie Alkohole, Aldehyde, Carbonsäuren und dergleichen, die nicht über andere Wasserreinigungsverfahren, wie beispielsweise mit einen Dampfstripper, entfernt werden können. Mithin erlaubt die Wasserreinigung durch einen anaeroben Reaktor eine derartige Reinigung des Wassers, dass dieses in der Anlage, ggf. nach Entsalzung in der bevorzugten Wasservollentsalzungseinrichtung, genutzt werden kann, und zwar beispielsweise in der vorzugsweise in der Anlage enthaltenen Elektrolyseeinrichtung e₁). Zudem kann das so gereinigte und entsalzte/entgaste Wasser als Kesselspeicherwasser verwendet werden. Dadurch wird der Frischwasserbedarf drastisch reduziert oder es wird sogar in einigen Fällen kein Frischwasser benötigt. Schließlich kann das in dem anaeroben Reaktor der Wasserreinigungseinrichtung gebildete Biogas, welches vornehmlich aus Kohlendioxid und Methan besteht, über eine Biogasrückführleitung von der Wasserreinigungseinrichtung zunächst über die Zufuhrleitung für Brennstoff in den Pre-Reformer und dann von dem Pre-Reformer in den autothermen Reformer geleitet werden, in dem es als Brennstoff fungiert.

Vorzugsweise ist die Wasserreinigungseinrichtung über eine Leitung mit der Wasservollentsalzungseinrichtung verbunden, so dass in der Wasserreinigungseinrichtung gereinigtes Wasser in die Wasservollentsalzungseinrichtung geleitet werden kann. So kann die Menge an entsalztem und entgastem Wasser insbesondere für die Elektrolyseeinrichtung flexibel den Bedürfnissen angepasst werden.

Gemäß einer weiteren, besonders bevorzugten Ausführungsform der vorliegenden Erfindung ist die Wasserreinigungseinrichtung direkt oder indirekt mit der Zufuhrleitung für Wasser(dampf) des bevorzugten Pre-Reformers verbunden, um gereinigtes Prozesswasser als Edukt dem Pre-Reformer und von diesem dem autothermen Reformer zuführen zu können.

Vorzugsweise ist in dieser Ausführungsform der vorliegenden Erfindung der Wasserreinigungseinrichtung eine Verdampfungseinrichtung nachgeschaltet, wobei die Verdampfungseinrichtung mit der Wasserreinigungseinrichtung über eine Leitung und mit der Zufuhrleitung für Wasser(dampf) des bevorzugten Pre-Reformers zur Zuführung von Wasser in Form von Dampf zu dem des bevorzugten Pre-Reformers verbunden ist.

Zur Abtrennung des Kohlendioxids aus dem Rohsynthesegas wird es in Weiterbildung des Erfindungsgedankens vorgeschlagen, dass die entsprechende Trenneinrichtung b) zur Abtrennung von Kohlendioxid aus dem in der den mindestens einen autothermen Reformer umfassenden (ersten) Synthesegasherstellungseinrichtung hergestellten Rohsynthesegas einen Aminwäscher zur Abtrennung von Kohlendioxid durch Absorption aus dem Rohsynthesegas aufweist. In dem Aminwäscher wird Kohlendioxid aus dem Rohsynthesegas durch Absorption mit wenigstens einem Absorptionsmittel, welches bevorzugt aus einer Aminverbindung, wie Monoethanolamin und/oder Diethanolamin und Wasser besteht, abgetrennt und dann direkt oder indirekt (beispielsweise über einen Desorber und/oder einen Verdichter) wieder zu dem autothermen Reformer der Synthesegasherstellungseinrichtung zurückgeführt wird.

Gute Ergebnisse werden insbesondere erzielt, wenn der Trenneinrichtung b) eine Verdichtungseinrichtung zur Verdichtung des Synthesegases auf den in der Fischer-Tropsch-Synthese erforderlichen Druck nachgeschaltet ist, wobei die Verdichtungseinrichtung mit der Trenneinrichtung über eine Leitung und mit der Fischer-Tropsch-Einrichtung über eine Synthesegaszufuhrleitung verbunden ist. In dem bevorzugten Verdichter wird das verbliebene Synthesegas auf den in der Fischer-Tropsch-Synthese erforderlichen Druck verdichtet, bevor das so verdichtete Synthesegas der Fischer-Tropsch-Einrichtung zugeführt wird. Das der Fischer-Tropsch-Einrichtung zugeführte Synthesegas enthält vorzugsweise 80 bis 90 Gew.-% Kohlenmonoxid und 10 bis 15 Gew.-% Wasserstoff.

Vorzugsweise wird der Verdichtungseinrichtung Wasserstoff zugeführt, um das H₂/CO-Molverhältnis des der Fischer-Tropsch-Einrichtung zugeführten Synthesegases auf einen optimalen Wert einzustellen. Zu diesem Zweck weist die Verdichtungseinrichtung bevorzugt eine Wasserstoffzufuhrleitung auf, welche bevorzugt mit der Wasserstoffabfuhrleitung der vorzugsweise in der Anlage enthaltenen Elektrolyseeinrichtung verbunden ist. Beispielsweise wird das Synthesegas in der Verdichtungseinrichtung auf 30 bis 60 bar, bevorzugt 40 bis 50 bar, wie etwa 45 bar verdichtet, sowie auf eine Temperatur von 100 bis 140 °C, bevorzugt 110 bis 130 °C, wie etwa 120 °C, eingestellt. Nach der Verdichtungseinrichtung erfolgt bevorzugt auch eine Reinigung des Synthesegases mittels Adsorbens in einem 3-stufigen Verfahren zur Abreinigung von Halogen-, Sauerstoff- und Schwefelverbindungen im ppb-Bereich, die für die Fischer-Tropsch-Synthese Katalysatorgifte darstellen. Die Reinigung erfolgt in drei nacheinander geschalteten Stufen für die Halogen-, die Sauerstoff- und die Schwefelabtrennung in entsprechenden Festbettreaktoren. Eine Aktivkohleschüttung dient als zusätzlicher Sicherheitsfilter. Das Synthesegas wird mit einem Druck von ca. 45 bar und einer Temperatur von etwa 120 °C der Feinreinigung zugeführt. Ein Aluminiumoxid/Natriumoxid-Adsorbens wirkt als Halogenfänger. Das von Halogenen befreite Synthesegas wird unter Temperaturregelung auf die Betriebstemperaturen der nachgeschalteten Reaktoren von 140 bis 150 °C weiter aufgeheizt. Diese Aufheizung erfolgt durch Beaufschlagung des Synthesegas-Vorwärmers mittels Mitteldruckdampf. Ein Aluminiumoxid/Palladiumoxid-Adsorbens kommt im Sauerstoffaustragsreaktor zur Anwendung und wirkt als Sauerstoff binder. Das noch mit Spuren von Schwefelverbindungen verunreinigte Synthesegas durchströmt im Schwefelaustragsreaktor unterschiedliche Adsorbensschüttungen, nämlich zuerst eine Schicht mit einem Zinkoxid/Aluminiumoxid/Natriumoxid-Adsorbens, in dem die Hauptentschwefelung stattfindet, und danach eine weitere Sicherheitsschicht mit Zinkoxid/Kupferoxid-Adsorbens, in dem gegebenenfalls Restschwefel gebunden wird. Eine zusätzliche Aktivkohleschüttung dient als weiterer Filter für weitere Verunreinigungen.

Zur Einstellung des optimalen H₂/CO-Molverhältnis des der Fischer-Tropsch-Einrichtung zugeführten Synthesegases ist es bevorzugt, dass die Anlage eine Steuereinrichtung umfasst, welche die Menge von in die Verdichtungseinrichtung geleiteten Wasserstoff so steuert, dass das H₂/CO-Molverhältnis in dem aus der Verdichtungseinrichtung abgeführten Synthesegas, welches der Fischer-Tropsch-Einrichtung über die Synthesegaszufuhrleitung zugeführt wird, mehr als 2,0 beträgt.

Das Synthesegas wird anschließend in der Fischer-Tropsch-Einrichtung zu Kohlenwasserstoffen umgesetzt. Die Fischer-Tropsch-Synthese wird vorzugsweise in einem Reaktor mit einem Katalysator bei einer Temperatur von 170 bis 270 °C, bevorzugt von 190 bis 250 °C und höchst bevorzugt 210 bis 230 °C, wie etwa 220° C, durchgeführt. Als Katalysatoren eignen sich insbesondere solche ausgewählt aus der Gruppe bestehend aus Kobalt-Katalysatoren, wie bevorzugt Co/MMT (Montmorillonite) oder Co/SiO₂. Die Fischer-Tropsch-Synthese wird vorzugsweise in einen oder mehreren Rohrbündelreaktoren durchgeführt, wobei sich der Katalysator in den Rohren befindet, wohingegen das Kühlmedium, vorzugsweise Kesselspeisewasser, im Mantelraum geführt wird. Die Fischer-Tropsch-Einrichtung umfasst bevorzugt einen oder zwei Reaktoren, um die Fischer-Tropsch-Synthese einstufig oder zweistufig durchführen zu können. Aus Kostengründen wird die Fischer-Tropsch-Synthese bevorzugt einstufig durchgeführt. Beispielsweise wird die Fischer-Tropsch-Synthese bei einem Druck von 25 bis 35 bar oder vorzugsweise auch bei einem höheren Druck von beispielsweise 45 bar durchgeführt. Je höher der Druck, desto kleiner können die Reaktoren gebaut werden. Vorzugsweise wird die Fischer-Tropsch-Synthese so durchgeführt, dass ein Kohlenmonoxid-Umsatz von 92% oder mehr erreicht wird. Bei der Fischer-Tropsch-Synthese werden als flüssige Produkte Kondensate und Wachse erhalten, die der nachgeschalteten Raffinationseinrichtung zugeführt werden. Die Kühlung des sehr stark exothermen Prozesses der Fischer-Tropsch-Synthese erfolgt über Kesselspeisewasser, das über eine entsprechende Leitung von der Wasservollentsalzungseinrichtung und/oder der Wasserreinigungseinrichtung und bevorzugt von der Wasservollentsalzungseinrichtung in die Fischer-Tropsch-Einrichtung geführt und zur Kühlung der Reaktoren verdampft wird. Über den Dampfdruck wird die erforderliche Kühltemperatur eingestellt. Der anfallende Dampf der Fischer-Tropsch-Synthese wird bevorzugt über eine Wasserdampfrückführleitung zumindest zu einem großen Teil der Synthesegasherstellungseinrichtung zugeführt. Die darüberhinausgehende Menge an Dampf aus der Fischer-Tropsch-Einrichtung wird vorzugsweise für die Beheizung in den anderen Anlageneinheiten verwendet, so dass kein externer Dampf erforderlich wird.

In der Raffinationseinrichtung werden die Produkte der Fischer-Tropsch-Synthese zu synthetischen Kraftstoffen, insbesondere Flugturbinenkraftstoff (Kerosin), Diesel und/oder Rohbenzin, wie beispielsweise Kerosin (SAF-"*Sustainable Aviation Fuel*"), Rohbenzin und/oder Leichtbenzin, veredelt. Für die Herstellung von industriell nutzbarem Kerosin, Diesel und Rohbenzin ist es erforderlich, das paraffinische Produkt der Fischer-Tropsch-Synthese durch Hydro-Isomerisierung und Hydrocracken (Iso-Hydrocracking) derart umzuwandeln, dass ein hochwertiger Flugturbinenkraftstoff mit den erforderlichen Kalteigenschaften (vorzugsweise mit einem Temperaturgrenzwert der Filtrierbarkeit entsprechend "Cold Filtration Plugging Point" (CFPP) von maximal -40 °C) produziert wird. Die schweren Produkte werden im Iso-Hydrocracker-Reaktor derart rezirkuliert, dass nur noch Kerosin und Rohbenzin als Produkte entstehen. Die dabei entstehenden leichten Gase werden als Brennstoff über den Pre-Reformer der Synthesegasherstellungseinrichtung zugeführt.

Daher ist es bevorzugt, dass die Raffinationseinrichtung einen oder mehrere Iso-Hydrocracker-Reaktoren vorzugsweise mit einem Edelmetallkatalysator, wie vorzugsweise einem Platin- oder Palladiumkatalysator umfasst. Besonders bevorzugt sind Edelmetallkatalysatoren, die keine Sulfidierung erfordern, da so eine Verunreinigung der Reaktionsprodukte mit schwefelhaltigen Komponenten vermieden wird, was es wiederum erlaubt, dass das während dem Iso-Hydrocracken erzeugte Prozessgas als auch der erzeugte Wasserdampf in den Wärmeerzeugungsabschnitt der Synthesegasherstellungseinrichtung zurückgeführt werden können. Das Iso-Hydrocracken ist eine katalytische Reaktion, in der insbesondere langkettige paraffinische Kohlenwasserstoffe zu kurzkettigen Isomeren mit verbesserten Kalteigenschaften für die Herstellung von Kerosin und/oder Diesel erzeugt werden. Die katalytische Reaktion erfolgt bevorzugt in Bettreaktoren, die zur Gewährleistung der maximalen Betttemperatur mit Wasserstoff gekühlt werden. Beispielsweise werden diese bei einem Druck von mindestens 70 bar betrieben.

Ferner ist es bevorzugt, dass die Raffinationseinrichtung einen oder mehrere Wasserstoffstripper zum Abtrennen von leichten Kohlenwasserstoffen (nämlich C₁- bis C₄-Kohlenwasserstoffen) umfasst. Schließlich umfasst die Raffinationseinrichtung vorzugsweise eine oder mehrere Destillationskolonnen zum Auftrennen der synthetischen Kraftstoffe in einzelne Fraktionen, wie Kerosin und Diesel, Kerosin und Rohbenzin, Kerosin, Rohbenzin und Diesel oder dergleichen.

Der für den Betrieb des Iso-Hydrocracker-Reaktors und für den Wasserstoffstripper benötigte Wasserstoff wird der Raffinationseinrichtung, wie vorstehend beschrieben, bevorzugt aus der Wasserstoffabfuhrleitung der Elektrolyseeinrichtung zugeführt.

Wie vorstehend beschrieben, wird das bei der Fischer-Tropsch-Synthese erzeugte Prozesswasser, welches hohe Kohlenwasserstoffanteile, wie insbesondere von Alkoholen, Aldehyden, Carbonsäuren etc., mit einem chemischen Sauerstoffbedarf (CSB) von ca. 40.000 mg/l aufweist, bevorzugt der Wasserreinigungseinrichtung zugeführt, um dort so gereinigt zu werden, dass es als Prozesswasser im Kreislauf geführt werden kann.

Ein weiterer Gegenstand der vorliegenden Patentanmeldung ist ein Verfahren zur Herstellung von synthetischen Kraftstoffen, insbesondere von Kerosin, Rohbenzin und/oder Diesel, welches in einer zuvor beschriebenen Anlage durchgeführt wird.

Wie vorstehend dargelegt, kann das erfindungsgemäße Verfahren ohne Abführung von Kohlendioxid bzw. ohne Kohlendioxidemission betrieben werden. Aus diesem Grund ist es bevorzugt, dass bei dem Verfahren kein Kohlendioxid abgeführt wird.

In Weiterbildung des Erfindungsgedankens wird vorgeschlagen, dass die Anlage einen Pre-Reformer umfasst, wobei in der Fischer-Tropsch-Einrichtung erzeugtes Prozessgas, in der Raffinationseinrichtung erzeugtes Prozessgas und ein Teil der in der Raffinationseinrichtung synthetischen Kraftstoffe als Brennstoff über die Zufuhrleitung für Brennstoff in den Pre-Reformer geleitet werden, wobei das Verfahren so gesteuert wird, dass dem mindestens einen autothermen Reformer und bevorzugt der gesamten Anlage nur ein Minimum an externem Brennstoff zugeführt werden muss bzw. wird.

Gemäß einer bevorzugten Ausführungsform der vorliegenden Erfindung umfasst die Anlage eine Elektrolyseeinrichtung e₁) zur Auftrennung von Wasser in Wasserstoff und Sauerstoff. Vorzugsweise wird der gesamte in der Elektrolyseeinrichtung erzeugte Sauerstoff über die Leitung für Sauerstoff enthaltendes Gas in den mindestens einen autothermen Reformer der Synthesegasherstellungseinrichtung geleitet und/oder wird zumindest ein Teil des in der Elektrolyseeinrichtung erzeugten Wasserstoffs dem mindestens einen autothermen Reformer der Synthesegasherstellungseinrichtung als Brennstoff und/oder zur Einstellung des H₂/CO-Molverhältnisses in dem erzeugten Rohsynthesegas zugeführt. Vorzugsweise wird das H₂/CO-Molverhältnis in dem in der Synthesegasherstellungseinrichtung erzeugten Rohsynthesegas 1,30 bis 1,85 und bevorzugt 1,35 bis 1,80, wie 1,35, 1,60 und 1,80, eingestellt.

Zusätzlich zu der Elektrolyseeinrichtung e₁) oder anstelle einer Elektrolyseeinrichtung kann die Anlage einen Methan-Dampfreformer e₂) umfassen, so dass bei dem Verfahren zudem eine Methan-Dampfreformierung durchgeführt wird. Vorzugsweise wird bei der Methan-Dampfreformierung aus Methan und Wasser und ggf. Wasserstoff ein Wasserstoff und Kohlenmonoxid umfassendes Rohsynthesegas hergestellt, wobei dem Methan-Dampfreformer Wasser(dampf), Methan und ggf. Wasserstoff zugeführt wird. Zudem werden aus dem Methan-Dampfreformer Rohsynthesegas und Wasser abgeführt, wobei das Rohsynthesegas, wenn die Anlage eine Elektrolyseeinrichtung e₁) umfasst, vorzugsweise dem wenigstens einen autothermen Reformer zugeführt wird. Sofern die Anlage keine Elektrolyseeinrichtung e₁) umfasst, wird das in dem Methan-Dampfreformer erzeugte Rohsynthesegas vorzugsweise zur Abtrennung von Wasserstoff aus dem Rohsynthesegas einer Wasserstofftrenneinrichtung, welche bevorzugt als Membrantrenneinrichtung ausgebildet ist, zugeführt. Hingegen wird das in dem Methan-Dampfreformer erzeugte Wasser vorzugsweise der Wasserreinigungseinrichtung zugeführt. Gute Ergebnisse werden insbesondere erhalten, wenn die Methan-Dampfreformierung bei einem Druck von 1 bis 20 bar, bevorzugt 5 bis 15 bar und besonders bevorzugt 10 bis 15 bar und bei einer Temperatur von 800 bis 1.500 °C, bevorzugt 900 bis 1.300 °C und besonders bevorzugt 1.000 bis 1.200 °C, wie beispielsweise bei einem Druck von etwa 12 bar und einer Temperatur von etwa 1.100 °C, durchgeführt wird. Die Grundreaktion ist stark endotherm, die CO₂- Bildung kann jedoch nicht vollständig ausgeschlossen werden. Bevorzugt wird für die Methan-Dampfreformierung ein Nickel-basierter Katalysator eingesetzt und wird das der Methan-Dampfreformierung zugeführte Methan in einer vorgeschalteten Hydrierung zur Entfernung der Schwefelbestandteile mit Wasserstoff, der vorzugsweise aus der Elektrolyseeinrichtung stammt, hydriert, wobei die hydrierten Schwefelkomponenten von dem Methan abgetrennt werden. In dem Methan-Dampfreformer wird das Synthesegas vorzugsweise durch Einsatzproduktvorwärmung und nachfolgende Erzeugung von Mitteldruck-Dampf gekühlt. Der erzeugte Dampf kann in Verbindung mit dem Mitteldruck-Dampf aus dem autothermen Reformer vollständig als Wasserdampf für den Methan-Dampfreformer verwendet werden.

Ferner ist es bevorzugt, dass bei dem erfindungsgemäßen Verfahren, in dem wenigstens einen autothermen Reformer eine autotherme Reformierung durchgeführt wird, bei der ein Nickel-basierter Katalysator eingesetzt wird, wobei die Reformierung bei einem Druck von 10 bis 50 bar und einer Temperatur von 700 bis 1.200 °C und bevorzugt bei einem Druck von 20 bis 30 bar und einer Temperatur von 900 bis 1.000 °C betrieben wird.

In Weiterbildung des Erfindungsgedankens wird es vorgeschlagen, dass die Anlage einen Pre-Reformer sowie eine Verdampfungseinrichtung umfasst, wobei Prozesswasser von der Fischer-Tropsch-Einrichtung in die Verdampfungseinrichtung geführt und darin zu Wasserdampf verdampft wird, bevor der so erzeugte Wasserdampf in den Pre-Reformer geführt wird, und wobei dem Pre-Reformer Brennstoff zugeführt wird, der aus in der Fischer-Tropsch-Einrichtung erzeugtem Prozessgas und/oder aus in der Raffinationseinrichtung erzeugtem Prozessgas und/oder aus einem Teil der in der Raffinationseinrichtung hergestellten synthetischen Kraftstoffe zusammengesetzt ist.

Gute Ergebnisse werden insbesondere erhalten, wenn dem wenigstens einen autothermen Reformer die in dem Pre-Reformer erzeugte Produktmischung, Kohlendioxid, Sauerstoff aus der Elektrolyseeinrichtung und Wasserstoff aus der Elektrolyseeinrichtung zugeführt werden, wobei das dem autothermen Reformer zugeführte Kohlendioxid über eine Zufuhrleitung und/oder aus der Trenneinrichtung direkt oder über eine Kohlendioxidverdichtungseinrichtung über die Leitung zugeführt wird.

Gemäß einer weiteren bevorzugten Ausführungsform der vorliegenden Erfindung wird dem Pre-Reformer zudem über eine Zufuhrleitung Methan zugeführt, wobei das Molverhältnis von in dem wenigstens einen autothermen Reformer vorliegenden Kohlendioxid zu Methan 0,476 bis 3,83 und bevorzugt 0,476 bis 0,81 beträgt.

Gemäß einer dazu alternativen Ausführungsform der vorliegenden Erfindung wird das molare Verhältnis von Kohlendioxid zu Methan in dem wenigstens einen autothermen Reformer vorliegenden Prozessgas mehr als 1,568 beträgt, bevorzugt mehr als 3,83 beträgt und besonders bevorzugt in dem in dem wenigstens einen autothermen Reformer vorliegenden Prozess kein Methan mehr zugeführt werden muss.

Gute Ergebnisse werden insbesondere erhalten, wenn der Trenneinrichtung b) eine Verdichtungseinrichtung zur Verdichtung des Gases auf den in der Fischer-Tropsch-Synthese erforderlichen Druck nachgeschaltet ist, wobei der Verdichtungseinrichtung ein Teil des in der bevorzugt in der Anlage enthaltenen Elektrolyseeinrichtung erzeugten Wasserstoffs zugeführt wird, wobei die Menge von in die Verdichtungseinrichtung geleiteten Wasserstoffs so gesteuert wird, dass das H₂/CO-Molverhältnis in dem aus der Verdichtungseinrichtung abgeführten und der Fischer-Tropsch-Einrichtung zugeführten Synthesegas mehr als 2,0 beträgt.

Vorzugsweise werden bei dem erfindungsgemäßen Verfahren ein Teil des in der bevorzugt in der Anlage enthaltenen Elektrolyseeinrichtung erzeugten Wasserstoffs der Fischer-Tropsch-Einrichtung zur Erzeugung des erforderlichen H₂/CO-Molverhältnisses von mehr als 2,0 in der Fischer-Tropsch-Tropsch-Einrichtung, ein Teil des in der Elektrolyseeinrichtung erzeugten Wasserstoffs der Raffinationseinrichtung und ein Teil des in der Elektrolyseeinrichtung erzeugten Wasserstoffs der Synthesegasverdichtungseinrichtung zugeführt.

Außerdem ist es bevorzugt, dass die Anlage eine Wasserreinigungseinrichtung umfasst, der von der Raffinationseinrichtung darin erzeugtes Wasser, von der Fischer-Tropsch-Einrichtung darin erzeugtes Wasser und von der Synthesegasherstellungseinrichtung Wasser zugeführt wird, wobei die Menge der in der Wasserreinigungseinrichtung gereinigten Wassers so gesteuert wird, dass diese zumindest ausreicht, um den kompletten Wasserbedarf der Synthesegasherstellungseinrichtung zu decken. Besonders bevorzugt umfasst die Wasserreinigung wenigstens eine Reinigungsstufe in einem anaeroben Reaktor. Dabei kann das in dem anaeroben Reaktor der Wasserreinigungseinrichtung gebildete Biogas, welches vornehmlich aus Kohlendioxid und Methan besteht, über eine Gasrückführleitung von der Wasserreinigungseinrichtung in den bevorzugten Pre-Reformer und von diesem in den mindestens einen autothermen Reformer der Synthesegasherstellungseinrichtung geleitet werden, um in dem mindestens einen autothermen Reformer der Synthesegasherstellungseinrichtung als Brennstoff zu fungieren.

Ferner ist es bevorzugt, dass das Verfahren in einer Anlage durchgeführt wird, welche eine Wasservollentsalzungseinrichtung umfasst, in der Frischwasser so entsalzt und entgast wird, dass das erzeugte Wasser eine für die Elektrolyse von Wasser ausreichend hohe Reinheit aufweist. Vorzugsweise wird bei dem erfindungsgemäßen Verfahren das Wasser in der Entsalzungseinrichtung zu Wasser mit einer Leitfähigkeit von kleiner 20 µS/cm, bevorzugt kleiner 10 µS/cm, besonders bevorzugt kleiner 5 µS/cm und höchst bevorzugt maximal 2 µS/cm gereinigt.

In Weiterbildung des Erfindungsgedankens wird vorgeschlagen, dass aus der Fischer-Tropsch-Einrichtung ein Purgegasstrom als Brenngas abgeleitet wird. Dadurch wird die Anreicherung von Inertgasen, wie Stickstoff und Argon, in der Synthesegasherstellungseinrichtung und in der Fischer-Tropsch-Einrichtung zuverlässig verhindert.

Schließlich ist es bevorzugt, dass in der Raffinationseinrichtung Kerosin, Rohbenzin und/oder Diesel und bevorzugt sowohl Kerosin als auch Rohbenzin hergestellt werden. Beispielsweise werden bei dem erfindungsgemäßen Verfahren Kerosin (SAF - *"Sustainable Aviation Fuel*"), Rohbenzin und Leichtbenzin hergestellt.

Nachfolgend wird die vorliegende Erfindung unter Bezug auf die Zeichnung näher beschrieben, in denen:
- Fig. 1: eine schematische Ansicht einer Anlage zur Herstellung von synthetischen Kraftstoffen gemäß eines Ausführungsbeispiels zeigt.
- Fig. 2: eine schematische Ansicht einer Anlage zur Herstellung von synthetischen Kraftstoffen gemäß eines anderen Ausführungsbeispiels zeigt.
- Fig. 3: eine schematische Ansicht einer Anlage zur Herstellung von synthetischen Kraftstoffen gemäß eines anderen Ausführungsbeispiels zeigt.
- Fig. 4: eine schematische Ansicht einer zur Herstellung von synthetischen Kraftstoffen gemäß eines weiteren Ausführungsbeispiels zeigt.

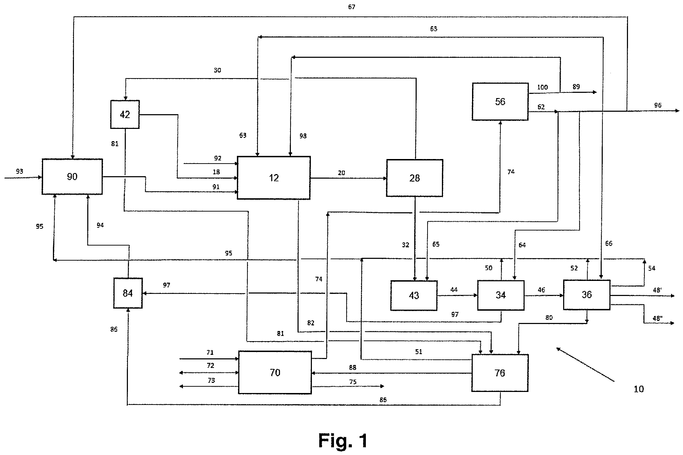

Die in der Figur 1 dargestellte Anlage 10 zur Herstellung von synthetischen Kraftstoffen umfasst:
a) als Synthesegasherstellungseinrichtung einen autothermen Reformer 12 zur Herstellung eines Kohlenmonoxid, Wasserstoff und Kohlendioxid umfassenden Rohsynthesegases aus Kohlendioxid, Wasser, Methan, Wasserstoff und Sauerstoff, wobei der autotherme Reformer 12 Zufuhrleitungen für Kohlendioxid 18, 92, für Pre-Reformer Produkt 91, für Wasserstoff 63 und für Sauerstoff 98 sowie eine Abfuhrleitung 20 für Rohsynthesegas und eine Abfuhrleitung 82 für Prozessabwasser umfasst,
b) eine Trenneinrichtung 28 zur Abtrennung von Kohlendioxid aus dem in dem autothermen Reformer 12 hergestellten Rohsynthesegas mit einer Abfuhrleitung 30 für Kohlendioxid und einer Abfuhrleitung 32 für Synthesegas,
c) eine Fischer-Tropsch-Einrichtung 34 zur Herstellung von Kohlenwasserstoffen durch ein Fischer-Tropsch-Verfahren aus dem Synthesegas, aus dem in der Trenneinrichtung 28 Kohlendioxid abgetrennt wurde,
d) eine Raffinationseinrichtung 36 zur Raffination der in der Fischer-Tropsch-Einrichtung 34 hergestellten Kohlenwasserstoffe zu den synthetischen Kraftstoffen, und
e) eine Elektrolyseeinrichtung 56 zur Auftrennung von Wasser in Wasserstoff und Sauerstoff umfasst, wobei die Elektrolyseeinrichtung 56 eine Wasserzufuhrleitung 74, eine Sauerstoffabfuhrleitung 100 und eine Wasserstoffabfuhrleitung 62 aufweist, und, wobei von der Sauerstoffabfuhrleitung 100 die Zufuhrleitung 98 in den autothermen Reformer 12 führt.

Dem autothermen Reformer 12 ist ein Pre-Reformer 90 vorgeschaltet und der Trenneinrichtung 28 ist eine Synthesegasverdichtungseinrichtung 43 zur Verdichtung des Synthesegases auf den in der Fischer-Tropsch-Synthese erforderlichen Druck nachgeschaltet. Dabei weist der Pre-Reformer 90 eine Zufuhrleitung 93 für Methan, eine Zufuhrleitung 94 für Wasserdampf, eine Zufuhrleitung 95 für Brennstoff, eine Wasserstoffzufuhrleitung 67 sowie eine zu dem autothermen Reformer 12 führende Produktleitung 91 auf.

Ferner ist die Synthesegasverdichtungseinrichtung 43 mit der Trenneinrichtung 28 über die Abfuhrleitung 32 für Synthesegas und mit der Fischer-Tropsch-Einrichtung 34 über eine Synthesegaszufuhrleitung 44 verbunden. Die Fischer-Tropsch-Einrichtung 34 wiederum ist mit der Raffinationseinrichtung 36 über die Leitung 46 verbunden, wobei die Raffinationseinrichtung 36 drei Produktabfuhrleitungen 48', 48", 54 aufweist.

Von der Fischer-Tropsch-Einrichtung 34 führt eine Gasrückführleitung 50 und von der Raffinationseinrichtung 36 führen eine Gasrückführleitung 52 und die Produktabfuhrleitung 54 als Treibstoffrückführleitung 54 in die Zufuhrleitung 95 für Brennstoff des Pre-Reformers 90.

Zudem führen von der Wasserstoffabfuhrleitung 62 der Elektrolyseeinrichtung 56 die Leitung 63 zu dem autothermen Reformer 12, die Leitung 67 zu dem Pre-Reformer 90, eine Leitung 64 zu der Fischer-Tropsch-Einrichtung 34, eine Leitung 65 zu der Synthesegasverdichtungseinrichtung 43, eine Leitung 66 zu der Raffinationseinrichtung 36 und eine Wasserstoffproduktabfuhrleitung 96 aus der Anlage 10. Die Sauerstoffabfuhrleitung 100 spaltet sich in die Sauerstoffzufuhrleitung 98 des autothermen Reformers 12 und in eine aus der Anlage 10 führende Sauerstoffproduktleitung 89.

Außerdem umfasst die Anlage 10 eine Wasservollentsalzungseinrichtung 70, welche eine Frischwasserzufuhrleitung 72 und eine Abfuhrleitung 74 für vollentsalztes Wasser aufweist, wobei die Abfuhrleitung 74 für vollentsalztes Wasser mit der Wasserzufuhrleitung 74 der Elektrolyseeinrichtung 56 verbunden ist. Zudem umfasst die Wasservollentsalzungseinrichtung 70 eine Zufuhrleitung 71 für Boilerkondensate, eine Abfuhrleitung 73 für Kesselspeisewasser und eine Abfuhrleitung 75 für Abwasser aus der Anlage.

Zudem umfasst die Anlage 10 eine Wasserreinigungseinrichtung 76, in welcher in der Anlage anfallendes Prozesswasser so aufgereinigt wird, dass es im Kreislauf geführt werden kann. Die Wasserreinigungseinrichtung 76 umfasst einen anaeroben Reaktor, in dem das zu reinigende Wasser mit anaeroben Mikroorganismen kontaktiert wird, welche die in dem Wasser enthaltenen organischen Verunreinigungen vorwiegend zu Kohlendioxid und Methan abbauen. Zu der Wasserreinigungseinrichtung 76 führen eine von der Raffinationseinrichtung 36 kommende Prozesswasserzufuhrleitung 80, eine von der Kohlendioxidverdichtungseinrichtung 42 kommende Prozesswasserzufuhrleitung 81 sowie eine von der Synthesegasherstellungseinrichtung 12 kommende Prozesswasserzufuhrleitung 82. Ferner umfasst die Anlage 10 eine Verdampfungseinrichtung 84, wobei die Verdampfungseinrichtung 84 mit der Wasserreinigungseinrichtung 76 über eine Prozesswasserleitung 86 verbunden ist. Zudem ist die Verdampfungseinrichtung 84 mit einer Prozesswasserabfuhrleitung 97 der Fischer-Tropsch-Einrichtung 34 sowie über die Zufuhrleitung 94 mit dem Pre-Reformer 90 verbunden. Schließlich führt von der Wasserreinigungseinrichtung 76 eine Prozesswasserleitung 88 zu der Wasservollentsalzungseinrichtung 70 und eine Biogasrückführleitung 51 zu der Zufuhrleitung 95 für Brennstoff für das in dem anaeroben Reaktor der Wasserreinigungseinrichtung 76 gebildete Biogas, welches vornehmlich aus Kohlendioxid und Methan beispielsweise in einem Molverhältnis von etwa 1:1 besteht.

Bei dem Betrieb der Anlage 10 wird dem Pre-Reformer 90 über die Zufuhrleitungen 93, 94, 95 Methan, Brennstoff (neben vornehmlich Methan auch Wasserstoff, Kohlenmonoxid sowie langkettige Kohlenwasserstoffe, längerkettig als Methan) und Wasserdampf zugeführt, wobei die langkettigen Kohlenwasserstoffe in dem Pre-Reformer 90 zu Methan, Wasserdampf und Kohlendioxid umgesetzt werden. Dem autothermen Reformer 12 werden über die Zufuhrleitung 91 die in dem Pre-Reformer 90 resultierende Produktmischung, über die Zufuhrleitungen 18, 92 Kohlendioxid, über die Zufuhrleitung 63 Wasserstoff und über die Zufuhrleitung 98 Sauerstoff zugeführt, wobei die so entstehende Mischung in dem autothermen Reformer 12 zu Rohsynthesegas enthaltend Kohlenmonoxid, Wasserstoff und Kohlendioxid umgesetzt wird. Die für diese sehr endotherme Reaktion notwendige Energie bzw. Wärme wird in dem autothermen Reformer 12 durch Verbrennen von Brennstoff, insbesondere Methan und Wasserstoff, mit Sauerstoff erzeugt. Der Brennstoff stammt aus in der Anlage 10 produzierten Abgasen bzw. Treibstoff, nämlich aus dem Abgas der Fischer-Tropsch-Einrichtung 34, welches dem Pre-Reformer 90 über die Leitungen 50, 95 zugeführt wird, aus dem Abgas der Raffinationseinrichtung 36, welches dem Pre-Reformer 90 über die Leitungen 52, 95 zugeführt wird, aus synthetischem Treibstoff (Leichtbenzin), welcher dem Pre-Reformer 90 über die Leitungen 54, 95 zugeführt wird, aus Biogas, welches dem Pre-Reformer 90 über die Biogasrückführleitung 51 aus der Wasserreinigungsvorrichtung 76 und der Leitung 95 zugeführt wird, aus Methan, welcher dem autothermen Reformer 12 über die Leitung 91 zugeführt wird, und aus Wasserstoff, welcher dem autothermen Reformer 12 über die Leitung 63 zugeführt wird. Die Reaktion erfolgt in dem autothermen Reformer 12 beispielsweise bei 25 bar und einer Temperatur von 950 °C. Das in dem autothermen Reformer 12 erzeugte Rohsynthesegas wird über die Abfuhrleitung 20 abgezogen und der Trenneinrichtung 28 zugeführt. In der Trenneinrichtung 28 wird aus dem Rohsynthesegas Kohlendioxid abgetrennt, welches der Kohlendioxidverdichtungseinrichtung 42 über die Leitung 30 zugeführt und darin beispielsweise auf 32,5 bar verdichtet wird, bevor das verdichtete Kohlendioxid von der Kohlendioxidverdichtungseinrichtung 42 über die Leitung 18 in den autothermen Reformer 12 zurückgeführt wird, wohingegen das in der Kohlendioxidverdichtungseinrichtung 42 anfallende Prozesswasser über die Leitung 81 in die Abwasserreinigungseinrichtung 76 geleitet wird.

Das in der Trenneinrichtung 28 von Kohlendioxid befreite Synthesegas wird über die Leitung 32 der Synthesegasverdichtungseinrichtung 43 zugeführt, in welche zudem von der Elektrolyseeinrichtung 56 über die Leitung 65 Wasserstoff zugeführt wird. In der Verdichtungseinrichtung wird das Synthesegas beispielsweise auf 42,5 bar verdichtet sowie auf eine Temperatur von 120 °C eingestellt. Ferner erfolgt nach der Verdichtung auch eine Reinigung des Synthesegases mit entsprechenden Adsorbenzien, durch welche aus dem Synthesegas Halogene, Schwefel, Stickstoff, Sauerstoff, Metalle und andere Verunreinigungen abgetrennt werden. Die Menge des der Synthesegasverdichtungseinrichtung 43 zugeführten Wasserstoffs wird so gesteuert, dass das H₂/CO-Molverhältnis des Synthesegases mehr als 2,0 beträgt. Dieses Synthesegas wird über die Leitung 44 in die Fischer-Tropsch-Einrichtung 34 geführt, in der das Synthesegas zu vornehmlich normalparaffinischen Kohlenwasserstoffen umgesetzt wird. Diese Kohlenwasserstoffe werden über die Leitung 46 in die Raffinationseinrichtung 36 geleitet, in der diese durch Hydro-Isomerisierung und Hydrocracken (Iso-Hydrocracking) zu synthetischen Rohkraftstoffen umgesetzt werden, die dann in dem Wasserstoffstripper getrennt werden und in den ein oder mehreren Destillationssäulen der Raffinationseinrichtung 36 in die Fraktionen Leichtbenzin, Rohbenzin und Kerosin (SAF-*"Sustainable Aviation Fuel*") aufgetrennt werden, von denen Rohbenzin und Kerosin über die Leitungen 48' (Benzin) und 48" (Kerosin) aus der Anlage 10 abgeführt werden und von denen Leichtbenzin über die Treibstoffrückführleitung 54 sowie über die Brennstoffzufuhrleitung 95 zunächst dem Pre-Reformer 90 und von diesem über die Zufuhrleitung 91 der Synthesegasherstellungseinrichtung bzw. dem autothermen Reformer 12 zugeführt wird. Während in der Fischer-Tropsch-Einrichtung 34 anfallendes Wasser als Prozesswasser in die Verdampfungseinrichtung 84 und von dort über die Wasserdampfzufuhrleitung 94 in den Pre-Reformer 90 geführt wird, wird in der Raffinationseinheit 36, in der Kohlendioxidverdichtungseinrichtung 42 und in der Synthesegasherstellungseinrichtung 12 anfallendes Wasser über die Prozesswasserleitungen 80, 81, 82 in die Abwasserreinigungseinrichtung 76 geleitet, in der das Abwasser durch anaerobe Mikroorganismen gereinigt wird. Ein Teil des gereinigten Prozesswassers wird über die Prozesswasserleitung 86 der Verdampfungseinrichtung 84 zugeführt, wohingegen der restliche Teil des gereinigten Prozesswassers über die Prozesswasserleitung 88 der Wasservollentsalzungseinrichtung 70 zugeführt wird.

Das für die Elektrolyseeinrichtung 56 benötige reine Wasser wird durch Vollentsalzung von Frischwasser und gereinigtem Prozesswasser in der Wasservollentsalzungseinrichtung 70 erzeugt und der Elektrolyseeinrichtung 56 über die Leitung 74 zugeführt. Der in der Elektrolyseeinrichtung 56, welche in diesem Ausführungsbeispiel als Alkali-Elektrolysezelle oder Polymerelektrolytmembran-Elektrolysezelle ausgestaltet ist, erzeugte Wasserstoff wird über die Leitungen 62, 63, 64, 65, 66, 67 dem autothermen Reformer 12, der Fischer-Tropsch-Einrichtung 34, der Synthesegasverdichtungseinrichtung 43, der Raffinationseinrichtung 36 und dem Pre-Reformer 90 zugeführt. Ein Teil des in der Elektrolyseeinrichtung 56 erzeugten Sauerstoffs wird über die Leitungen 100, 98 in den autothermen Reformer 12 geleitet, wohingegen der andere Teil des in der Elektrolyseeinrichtung 56 erzeugten Sauerstoffs über die Leitung 89 aus der Anlage 10 abgeführt wird.

Beim Betrieb der in der Figur 1 gezeigten Anlage kann das für die Fischer-Tropsch-Einrichtung 34 gewünschte H₂/CO-Molverhältnis von größer als 2.0 auf zwei verschiedene Arten eingestellt werden. Zum einen kann der notwendige Wasserstoff über die Wasserstoffzufuhrleitung 63 direkt dem autothermen Reformer 12 zugeführt werden oder direkt über die Wasserstoffzufuhrleitung 65 der Saugseite der Synthesegasverdichtungseinrichtung 43 zugeführt werden. In dem ersten Fall nimmt der Wasserstoff zu einem Teil an der Reaktion in dem autothermen Reformer 12 teil und wird so teilweise zu Wasser umgesetzt, wofür zur Aufrechterhaltung der autothermen Fahrweise in dem autothermen Reformer 12 weniger Methan im Einsatz benötigt wird. Das H₂/CO-Molverhältnis in dem Synthesegas der Leitung 20 beträgt hier bereits mehr als 2.0. In dem anderen Fall wird der Wasserstoff nach dem autothermen Reformer 12 auf die Saugseite des Synthesegasverdichtungseinrichtung 43 geführt. Dadurch wird zur Einstellung des notwendigen H₂/CO-Molverhältnisses weniger Wasserstoff benötigt, dafür steigt aber der notwendige Methaneinsatz zu dem autothermen Reformer 12 etwas an. Beide Varianten sind möglich und können jeweils bezüglich der Methan- bzw. der Stromkosten für die Herstellung des Wasserstoffes abgewogen werden. Wird der Wasserstoff der Anlage 10 über die Wasserstoffzufuhrleitung 65 zugeführt, erreicht der autotherme Reformer 12 ein H₂/CO-Molverhältnis in der Leitung 20 von 1,6 bis 1,8. Da die Größe der Elektrolyse durch die Sauerstoffmenge bestimmt wird, fällt immer ein Wasserstoffstrom über die Wasserstoffproduktabfuhrleitung 96 zum Export an.

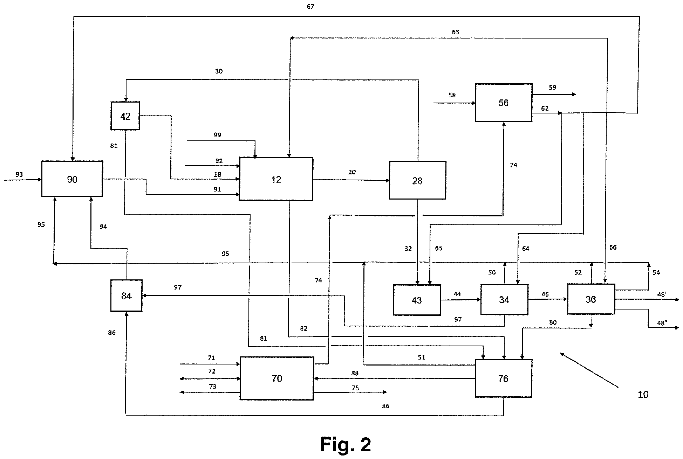

Die in der Figur 2 gezeigte Anlage 10 entspricht der in der Figur 1 gezeigten, ausgenommen, dass die in der Figur 2 gezeigte Elektrolyseeinrichtung 56 als Festoxid-Elektrolysezelle (SOEC) ausgestaltet ist und von der Elektrolyseeinrichtung 56 keine Sauerstoffzufuhrleitung 98 zu dem autothermen Reformer 12 führt. Im Austausch dazu umfasst die in der Figur 2 gezeigte Anlage 10 eine Sauerstoffzufuhrleitung 99 zur Zuführung von externem Sauerstoff zu dem autothermen Reformer 12, eine Luftzufuhrleitung 58 zu der Elektrolyseeinrichtung 56 sowie eine Luftabfuhrleitung 59 aus der Elektrolyseeinrichtung 56. Die Festoxid-Elektrolysezelle (SOEC) hat den Vorteil, sehr effizient zu sein, aber den Nachteil, dass der darin produzierte Sauerstoff nur mit Luft vermischt anfällt und so für die Versorgung des autothermen Reformers 12 mit Sauerstoff ausfällt. Daher wird bei dieser Ausführungsform eine externe Sauerstoffversorgung durch die Sauerstoffzufuhrleitung 99 eingesetzt.

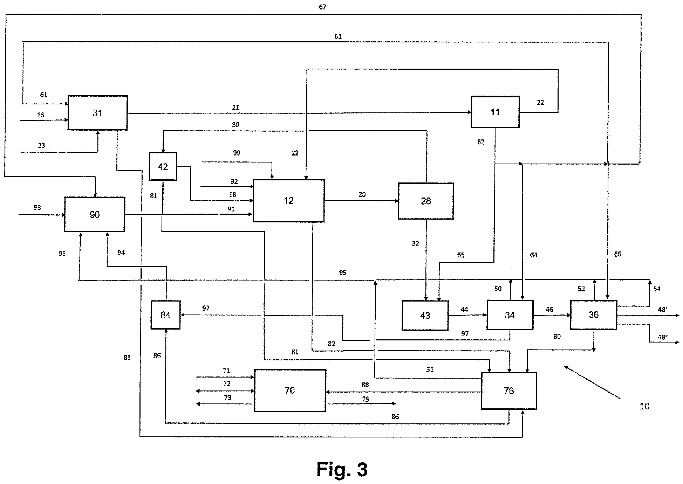

Die in der Figur 3 gezeigte Anlage 10 entspricht der in der Figur 1 gezeigten, ausgenommen, dass die in der Figur 3 gezeigte Anlage 10 keine Elektrolyseeinrichtung 56, sondern anstelle dessen einen Methan-Dampfreformer 31 als zweite Synthesegasherstellungseinrichtung zur Herstellung eines Kohlenmonoxid und Wasserstoff umfassenden Rohsynthesegases aus Methan, Wasser und Wasserstoff sowie eine Membrantrenneinheit 11 zur Abtrennung von Wasserstoff aus Rohsynthesegas aufweist. Dabei weist der Methan-Dampfreformer 31 eine Wasserstoffzufuhrleitung 61, eine Methanzufuhrleitung 13, eine Wasserdampfzufuhrleitung 23, eine Abfuhrleitung 21 für Rohsynthesegas sowie eine Abfuhrleitung 83 für Prozesswasser auf, welche mit der Wasserreinigungseinrichtung 76 verbunden ist. Das in dem autothermen Reformer 12 erzeugte Rohsynthesegase wird zur Abtrennung von Kohlendioxid der Trenneinrichtung 28 zugeführt, wohingegen das in dem Methan-Dampfreformer 31 erzeugte Rohsynthesegase zur Abtrennung von kleineren Wasserstoffmengen der Membrantrenneinheit 11 zugeführt wird. Das in der Membrantrenneinheit 11 erzeugte wasserstoffreduzierte Rohsyntheserestgas wird vollständig über die Abfuhrleitung 22 dem autothermen Reformer 12 zugeführt, wohingegen jeweils ein Teil des in der Membrantrenneinheit 11 abgetrennten Wasserstoffs über die Leitungen 61, 62 in den Methan-Dampfreformer 31 geleitet wird, über die Leitungen 62, 65 in die Synthesegasverdichtungseinrichtung 43 geleitet wird, über die Leitungen 62, 64 in die Fischer-Tropsch-Einrichtung 34 geleitet wird und über die Leitungen 62, 66 in die Raffinationseinrichtung 36 geleitet wird. Der Methan-Dampfreformer 31 ist allein mittels Induktion komplett elektrisch beheizbar, d.h. durch die induktive Beheizung des Methan-Dampfreformers 31 wird kein Kohlendioxid emittiert. Der Methan-Dampfreformer wird bei niedrigen bis moderaten Drücken von 1 bis 20 bar, wie 10 bis 15 bar, und Reaktionstemperaturen von bis zu 1.500 °C, wie 1.000 bis 1.200 °C, betrieben. Ein Vorteil dieser Ausführungsform ist es, dass der Methan-Dampfreformer 31 ein Rohsynthesegas mit einem höheren H₂/CO-Molverhältnis erzeugt als der autotherme Reformer 12. Mithin weist die Rohsynthesegasmischung aus dem in dem autothermen Reformer 12 erzeugten Rohsynthesegas und dem in dem Methan-Dampfreformer 31 erzeugten Rohsynthesegas ein höheres H₂/CO-Molverhältnis als das in dem autothermen Reformer 12 erzeugte Rohsynthesegas auf, so dass bei dieser Ausführungsform - im Vergleich zu dem alleinigen Einsatz des autothermen Reformers 12 - mit dem kombinierten Einsatz eines autothermen Reformers 12 und eines Methan-Dampfreformers 31 kein Wasserstoff aus der Elektrolyseeinrichtung 56 zur Einstellung des gewünschten H₂/CO-Molverhältnisses in dem der Trenneinrichtung 28 zugeführten Rohsynthesegas benötigt wird.

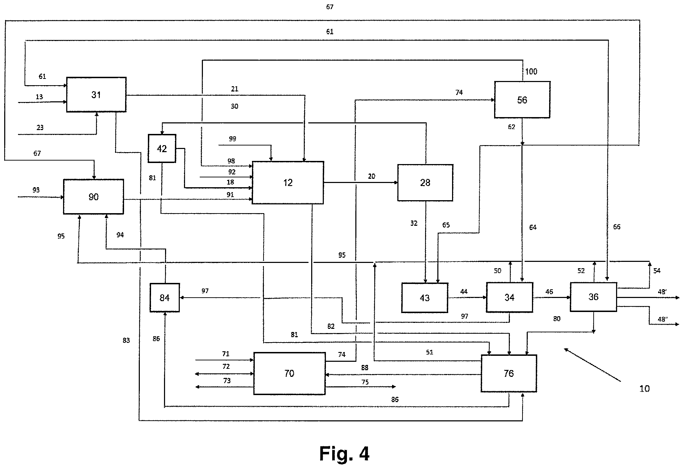

Die in der Figur 4 gezeigte Anlage 10 entspricht der in der Figur 3 gezeigten, ausgenommen, dass die in der Figur 4 gezeigte Anlage 10 anstelle der Membrantrenneinheit 11 zur Abtrennung von Wasserstoff aus Rohsynthesegas eine Elektrolyseeinrichtung 56 umfasst. Die Elektrolyseeinrichtung 56 ist - so wie bei der in der Figur 1 gezeigten Ausführungsform - über die Leitungen 62, 65 mit der Synthesegasverdichtungseinrichtung 43, über die Leitungen 62, 64 mit der Fischer-Tropsch-Einrichtung 34, über die Leitungen 62, 66 mit der Raffinationseinrichtung 36 sowie über die aus der Wasserentsalzungseinrichtung 70 führende Abfuhrleitung 74 für vollentsalztes Wasser mit der Wasserentsalzungseinrichtung 70 verbunden. Zudem führt von der Elektrolyseeinrichtung 56 eine Sauerstoffabfuhrleitung 100 in die Sauerstoffleitung 98 des autothermen Reformers 12 und eine mit der Wasserstoffabfuhrleitung 62 der Elektrolyseeinrichtung verbundene Wasserstoffzufuhrleitung 61 zu dem Dampfreformer 31. Die Abfuhrleitung 21 für Rohsynthesegas aus dem Methan-Dampfreformer 31 führt in dieser Ausführungsform, anders als bei der in der Figur 3 gezeigten Ausführungsform, in den autothermen Reformer 12.

Nachfolgend wird die vorliegende Erfindung anhand eines illustrativ, aber die Erfindung nicht einschränkenden Beispiels beschrieben.

### Beispiel 1

Es wurde das erfindungsgemäße Verfahren in einer in der Figur 1 gezeigten und vorstehend beschriebenen Anlage mit der Prozesssimulationssoftware PRO/II (AVEVA) zur Herstellung von 136.320 Litern pro Tag Kerosin (SAF-"*Sustainable Aviation Fuel*") und 39.696 Litern pro Tag Rohbenzin (Naphtha) simuliert. Dabei wurden für die einzelnen Leitungen folgende Produktströme ermittelt:

| **Nr.** | **Bezeichnung** | **Gesamt kg/h** | **Gas Nm³/h** | **Flüssig Std.m³/h** |
|---|---|---|---|---|
| 18 | Zufuhrleitung für Kohlendioxid zu der Synthesegasherstellungseinrichtunq (ATR) | 11.650 | 5.976 | |
| 20 | Abfuhrleitung für Rohsynthesegas des autothermen Reformers | 31.063 | 47.021 | |
| 30 | Abfuhrleitung für Kohlendioxid aus der Rohsynthesegastrenneinrichtung | 11.709 | 6.013 | |

| | | | | |
|---|---|---|---|---|
| 32 | Abfuhrleitung für Syntheseqas | 19.354 | 41.045 | |
| 44 | Synthesegaszufuhrleitung zu der Fischer-Tropsch-Einrichtunq | 19.354 | 41.045 | |
| 46 | Zufuhrleitung zu der Raffinationseinrichtung | 5.735 | | 7,45 |
| 48' | Produktabfuhrleitung Rohbenzin (Naphtha) | 1.133 | | 1,65 |
| 48" | Produktabfuhrleitung Kerosin | 4.260 | | 5,68 |
| 50 | Gasrückführleitung der Fischer-Tropsch-Einrichtung | 3.522 | 4.351 | |
| 51 | Gasrückführleitung der Wasserreinigungseinrichtung | 205 | 194 | |
| 52 | Gasrückführleitung der Raffinationseinrichtung | 0 | 0 | |
| 54 | Treibstoffrückführleitung | 324 | | 0,515 |
| 62 | Wasserstoffabfuhrleitung der Elektrolyseeinrichtunq | 1.198 | 13.244 | |
| 63 | Wasserstoffzufuhrleitung zu der Synthesegasherstellungseinrichtung (ATR) | 1.105 | 12.289 | |
| 64 | Wasserstoffzufuhrleitung zu der Fischer-Tropsch-Einrichtung | 0 | 0 | |
| 65 | Wasserstoffzufuhrleitung zu der Synthesegasverdichtungseinrichtung | 0 | 0 | |
| 66 | Wasserstoffzufuhrleitung zu der Raffinationseinrichtung | 79 | 843 | |
| 67 | Wasserstoffzufuhrleitung des Pre-Reformers | 10 | 112 | |
| 71 | Zufuhrleitung für Boilerkondensate | 56.597 | | 56,6 |
| 72 | Frischwasserzufuhrleitung / Wasserabfuhrleitunq | 2.230 | | 2,23 |

| | | | | |
|---|---|---|---|---|
| 73 | Abfuhrleitung für Kesselspeisewasser | 57.204 | | 57,2 |
| 74 | Abfuhrleitung für voll entsalztes Wasser | 10.771 | | 10,78 |
| 75 | Abfuhrleitung für Abwasser aus der Anlage | 4.710 | | 4,72 |
| 80 | Prozesswasserabfuhrleitung von der Raffinationseinrichtunq | 96 | | 0,097 |
| 81 | Prozesswasserabfuhrleitung von der Kohlendioxidverdichtungseinrichtung | 59 | | 0,06 |
| 82 | Prozesswasserabfuhrleitung von der Synthesegasherstellungseinrichtung (ATR) | 14.111 | | 14,15 |
| 86 | Prozesswasserzufuhrleitung der Verdampfungseinrichtung | 203 | | 0,204 |
| 88 | Prozesswasserzufuhrleitung der Wasserentsalzungseinrichtung | 13.858 | | 13,86 |
| 89 | Sauerstoffproduktleitung | 0 | 0 | |
| 91 | Pre-Reformer Produkt zur Synthesegaseinrichtung (ATR) | 19.246 | 11.812 | |
| 92 | Externe Zufuhrleitung für Kohlendioxid | 3.600 | 1.833 | |
| 93 | Zufuhrleitung für Methan der Pre- Reformereinrichtung | 4.448 | 6.215 | |
| 94 | Zufuhrleitung für Wasserdampf der Pre-Reformereinrichtung | 10.300 | 12.815 | |
| 95 | Zufuhrleitung für Brennstoff der Pre-Reformereinrichtung | 4.488 | 4.885 | |
| 96 | Wasserstoffproduktleitunq | 0 | 0 | |
| 97 | Prozesswasserzufuhrleitung der Verdampfungseinrichtung | 10.097 | | 10,1 |

| | | | | |
|---|---|---|---|---|
| 98 | Sauerstoffzufuhrleitung zu der Synthesegaseinrichtung (ATR) | 9.573 | 6.706 | |
| 100 | Sauerstoffproduktleitung der Elektrolyseeinrichtung (PEM und Alkali) | 9.573 | 6.706 | |

### Beispiel 2

Es wurde das erfindungsgemäße Verfahren in einer in der Figur 2 gezeigten und vorstehend beschriebenen Anlage mit der Prozesssimulationssoftware PRO/II (AVEVA) zur Herstellung von 136.320 Litern pro Tag Kerosin (SAF-*"Sustainable Aviation Fuel*") und 39.696 Litern pro Tag Rohbenzin (Naphtha) simuliert. Dabei wurden für die einzelnen Leitungen folgende Produktströme ermittelt:

| **Nr.** | **Bezeichnung** | **Gesamt kg/h** | **Gas Nm³/h** | **Flüssig Std.m³/h** |
|---|---|---|---|---|
| 18 | Zufuhrleitung für Kohlendioxid zu der Synthesegasherstellungseinrichtung (ATR) | 17.366 | 9.012 | |
| 20 | Abfuhrleitung für Rohsynthesegas des autothermen Reformers | 36.756 | 50.123 | |
| 30 | Abfuhrleitung für Kohlendioxid aus der Rohsynthesegastrenneinrichtung | 17.409 | 8.929 | |
| 32 | Abfuhrleitung für Synthesegas | 19.347 | 41.190 | |
| 44 | Synthesegaszufuhrleitung zu der Fischer-Tropsch-Einrichtunq | 19.347 | 41.190 | |
| 46 | Zufuhrleitung zu der Raffinationseinrichtung | 5.732 | | 7,44 |
| 48` | Produktabfuhrleitung Rohbenzin (Naphtha) | 1.133 | | 1,65 |
| 48" | Produktabfuhrleitung Kerosin | 4.258 | | 5,67 |

| | | | | |
|---|---|---|---|---|
| 50 | Gasrückführleitung der Fischer-Tropsch-Einrichtung | 3.521 | 4.350 | |
| 51 | Gasrückführleitung der Wasserreinigungseinrichtung | 205 | 194 | |
| 52 | Gasrückführleitung der Raffinationseinrichtung | 0 | 0 | |
| 54 | Treibstoffrückführleitung | 323 | | 0,514 |
| 58 | Luftzufuhrleitung der Elektrolyseeinrichtung (SOEC) | 28.766 | 22.574 | |
| 59 | Luftabfuhrleitung der Elektrolyseeinrichtung (SOEC) | 53.154 | 39.868 | |
| 62 | Wasserstoffabfuhrleitung der Elektrolyseeinrichtunq | 3.047 | 33.833 | |
| 63 | Wasserstoffzufuhrleitung zu der Synthesegasherstellungseinrichtung (ATR) | 2.967 | 32.984 | |
| 64 | Wasserstoffzufuhrleitung zu der Fischer-Tropsch-Einrichtung | 0 | 0 | |
| 65 | Wasserstoffzufuhrleitung zu der Synthesegasverdichtungseinrichtung | 0 | 0 | |
| 66 | Wasserstoffzufuhrleitung zu der Raffinationseinrichtung | 79 | 843 | |
| 67 | Wasserstoffzufuhrleitung des Pre-Reformers | 1 | 5,5 | |
| 71 | Zufuhrleitung für Boilerkondensate | 56.718 | | 56,7 |
| 72 | Frischwasserzufuhrleitung / Wasserabfuhrleitung | 12.744 | | 12,8 |
| 73 | Abfuhrleitung für Kesselspeisewasser | 57.303 | | 57,3 |
| 74 | Abfuhrleitung für voll entsalztes Wasser | 27.415 | | 27,5 |
| 75 | Abfuhrleitung für Abwasser aus der Anlage | 5.551 | | 5,6 |

| | | | | |
|---|---|---|---|---|
| 80 | Prozesswasserabfuhrleitung von der Raffinationseinrichtung | 96 | | 0,097 |
| 81 | Prozesswasserabfuhrleitung von der Kohlendioxidverdichtungseinrichtung | 43 | | 0,043 |
| 82 | Prozesswasserabfuhrleitung von der Synthesegasherstellungseinrichtung (ATR) | 21.079 | | 21,1 |
| 86 | Prozesswasserzufuhrleitung der Verdampfungseinrichtung | 206 | | 0,207 |
| 88 | Prozesswasserzufuh rleitung der Wasserentsalzungseinrichtung | 20.807 | | 20,8 |
| 91 | Pre-Reformer Produkt zur Synthesegaseinrichtung (ATR) | 14.859 | 17.631 | |
| 92 | Externe Zufuhrleitung für Kohlendioxid | 15.400 | 7.843 | |
| 93 | Zufuhrleitung für Methan der Pre- Reformereinrichtung | 70 | 99 | |
| 94 | Zufuhrleitung für Wasserdampf der Pre-Reformereinrichtung | 10.300 | 12.815 | |
| 95 | Zufuhrleitung für Brennstoff der Pre-Reformereinrichtung | 4.488 | 4.885 | |
| 97 | Prozesswasserzufuhrleitung der Verdampfungseinrichtung | 10.094 | | 10,1 |
| 99 | Sauerstoffzufuhrleitung (extern) zu der Syntheseqaseinrichtunq (ATR) | 7.243 | 5.074 | |
| 100 | Sauerstoffproduktleitung der Elektrolyseeinrichtunq (PEM und Alkali) | 9.573 | 6.706 | |

### Beispiel 3

Es wurde das erfindungsgemäße Verfahren in einer in der Figur 3 gezeigten und vorstehend beschriebenen Anlage mit der Prozesssimulationssoftware PRO/II (AVEVA) zur Herstellung von 132.320 Litern pro Tag Kerosin (SAF-*"Sustainable Aviation Fuel*") und 39.696 Litern pro Tag Rohbenzin (Naphtha) simuliert. Dabei wurden für die einzelnen Leitungen folgende Produktströme ermittelt:

| **Nr.** | **Bezeichnung** | **Gesamt kg/h** | **Gas Nm³/h** | **Flüssig Std.m³/h** |
|---|---|---|---|---|
| 13 | Methanzufuhrleitung zu dem Methan -Dampfreformer | 4.971 | 6.945 | |
| 18 | Zufuhrleitung für Kohlendioxid zu der Synthesegasherstellungseinrichtung (ATR) | 15.485 | 8.044 | |
| 20 | Abfuhrleitung für Rohsynthesegas des autothermen Reformers | 34.845 | 49.101 | |
| 21 | Abfuhrleitung für Rohsynthesegas des Methan - Dampfreformers | 10.333 | 26.906 | |
| 22 | Abfuhrleitung für Rohsynthesegas der Membrantrenneinrichtung | 10.239 | 25.860 | |
| 23 | Wasser(dampf)zufuhrleitung des Methan-Dampfreformers | 5.468 | 6.803 | |
| 30 | Abfuhrleitung für Kohlendioxid aus der Rohsyntheseqastrenneinrichtung | 15.485 | 8.044 | |
| 32 | Abfuhrleitung für Synthesegas | 19.360 | 41.160 | |
| 44 | Synthesegaszufuhrleitung zu der Fischer-Tropsch-Einrichtunq | 19.360 | 41.160 | |
| 46 | Zufuhrleitung zu der Raffinationseinrichtung | 5.736 | | 7,45 |
| 48' | Produktabfuhrleitung Rohbenzin (Naphtha) | 1.134 | | 1,64 |
| 48" | Produktabfuhrleitung Kerosin | 4.261 | | 5,68 |

| | | | | |
|---|---|---|---|---|
| 50 | Gasrückführleitung der Fischer-Tropsch-Einrichtung | 3.523 | 4.352 | |
| 51 | Gasrückführleitung der Wasserreinigungseinrichtung | 205 | 194 | |
| 52 | Gasrückführleitung der Raffinationseinrichtung | 0 | 0 | |
| 54 | Treibstoffrückführleitung | 324 | | 0,512 |
| 61 | Wasserstoffzufuhrleitung des Methan -Dampfreformers | 5 | 56 | |
| 62 | Wasserstoffabfuhrleitung der Elektrolyseeinrichtung | 94 | 1.045 | |
| 64 | Wasserstoffzufuhrleitung zu der Fischer-Tropsch-Einrichtung | 0 | 0 | |
| 65 | Wasserstoffzufuhrleitung zu der Synthesegasverdichtungseinrichtung | 0 | 0 | |
| 66 | Wasserstoffzufuhrleitung zu der Raffinationseinrichtung | 79 | 843 | |
| 67 | Wasserstoffzufuhrleitung des Pre-Reformers | 10 | 111 | |
| 71 | Zufuhrleitung für Boilerkondensate | 61.944 | | 61,9 |
| 72 | Frischwasserzufuhrlei-tung / Wasserabfuhrleitung | -672 | | -0,67 |
| 73 | Abfuhrleitung für Kesselspeisewasser | 68.015 | | 68,0 |
| 74 | Abfuhrleitung für voll entsalztes Wasser | 0 | | 0 |
| 75 | Abfuhrleitung für Abwasser aus der Anlage | 4.832 | | 4,8 |
| 80 | Prozesswasserabfuhrleitung von der Raffinationseinrichtung | 96 | | 0,096 |
| 81 | Prozesswasserabfuhrleitung von der Kohlendioxidverdichtungseinrichtung | 0 | | 0 |

| | | | | |
|---|---|---|---|---|
| 82 | Prozesswasserabfuhrleitung von der Synthesegasherstellungseinrichtung (ATR) | 11.773 | | 11,8 |
| 83 | Prozesswasserabfuhrleitung von der Synthesegasherstellungseinrichtung (SMR) | 111 | | 0,11 |
| 86 | Prozesswasserzufuhrleitung der Verdampfungseinrichtung | 199 | | 0,2 |
| 88 | Prozesswasserzufuhrleitung der Wasserentsalzungseinrichtung | 11.576 | | 11,58 |
| 91 | Pre-Reformer Produkt zur Synthesegaseinrichtung (ATR) | 15.574 | 18.674 | |
| 92 | Externe Zufuhrleitung für Kohlendioxid | 0 | 0 | |
| 93 | Zufuhrleitung für Methan der Pre- Reformereinrichtung | 776 | 1.085 | |
| 94 | Zufuhrleitung für Wasserdampf der Pre-Reformereinrichtung | 10.300 | 12.815 | |
| 95 | Zufuhrleitung für Brennstoff der Pre-Reformereinrichtung | 4.488 | 4.885 | |
| 96 | Wasserstoffproduktleitun | | | |
| 97 | Prozesswasserzufuhrleitung der Verdampfungseinrichtung | 10.101 | | 10,1 |
| 99 | Sauerstoffzufuhrleitung (extern) zu der Synthesegaseinrichtung (ATR) | 5.320 | 3.727 | |
| 100 | Sauerstoffproduktleitung der Elektrolyseeinrichtung (PEM und Alkali) | | | |

### Bezugszeichenliste

- 10: Anlage zur Herstellung von synthetischen Kraftstoffen
- 11: Membrantrenneinrichtung für Wasserstoff aus dem Synthesegas
- 12: (Erste) Synthesegasherstellungseinrichtung / Autothermer Reformer (ATR)
- 13: Methanzufuhrleitung zu dem Methan-Dampfreformer
- 18: Zufuhrleitung für Kohlendioxid zu der Synthesegasherstellungseinrichtung (ATR)
- 20: Abfuhrleitung für Rohsynthesegas aus dem ATR
- 21: Abfuhrleitung für Rohsynthesegas aus dem Methan-Dampfreformer
- 22: Abfuhrleitung für Rohsynthesegas der Membrantrenneinrichtung
- 23: Wasser(dampf)zufuhrleitung des Methan-Dampfreformers
- 28: Trenneinrichtung zur Abtrennung von Kohlendioxid aus Rohsynthesegas
- 30: Abfuhrleitung für Kohlendioxid aus der Rohsynthesegastrenneinrichtung
- 31: Methan-Dampfreformer (zweite Synthesegasherstellungseinrichtung, SMR)
- 32: Abfuhrleitung für Synthesegas
- 34: Fischer-Tropsch-Einrichtung
- 36: Raffinationseinrichtung
- 42: Kohlendioxidverdichtungseinrichtung
- 43: Synthesegasverdichtungseinrichtung
- 44: Synthesegaszufuhrleitung zu der Fischer-Tropsch-Einrichtung
- 46: Zufuhrleitung zu der Raffinationseinrichtung
- 48', 48": Produktabfuhrleitungen
- 50: Gasrückführleitung der Fischer-Tropsch-Einrichtung
- 51: Biogasrückführleitung aus der Wasserreinigungseinrichtung
- 52: Gasrückführleitung der Raffinationseinrichtung
- 54: Treibstoffrückführleitung
- 56: Elektrolyseeinrichtung (Alkali, PEM, SOEC)
- 58: Luftzufuhrleitung der Elektrolyseeinrichtung (SOEC)
- 59: Luftabfuhrleitung der Elektrolyseeinrichtung (SOEC)
- 61: Wasserstoffzufuhrleitung des Methan-Dampfreformers
- 62: Wasserstoffabfuhrleitung der Elektrolyseeinrichtung
- 63: Wasserstoffzufuhrleitung zu der Synthesegasherstellungseinrichtung (ATR)
- 64: Wasserstoffzufuhrleitung zu der Fischer-Tropsch-Einrichtung
- 65: Wasserstoffzufuhrleitung zu der Synthesegasverdichtungseinrichtung
- 66: Wasserstoffzufuhrleitung zu der Raffinationseinrichtung
- 67: Wasserstoffzufuhrleitung des Pre-Reformers
- 70: Wasserentsalzungseinrichtung
- 71: Zufuhrleitung für Boilerkondensate
- 72: Frischwasserzufuhrleitung / Wasserabfuhrleitung
- 73: Abfuhrleitung für Kesselspeisewasser
- 74: Abfuhrleitung für vollentsalztes Wasser / Wasserzufuhrleitung zu der Elektrolyseeinrichtung
- 75: Abfuhrleitung für Abwasser aus der Anlage
- 76: Wasserreinigungseinrichtung
- 80: Prozesswasserabfuhrleitung von der Raffinationseinrichtung
- 81: Prozesswasserabfuhrleitung von der Kohlendioxidverdichtungseinrichtung
- 82: Prozesswasserabfuhrleitung von der Synthesegasherstellungseinrichtung (ATR)
- 83: Prozesswasserabfuhrleitung von dem Methan-Dampfreformer (SMR)
- 84: Verdampfungseinrichtung
- 86: Prozesswasserzufuhrleitung der Verdampfungseinrichtung
- 88: Prozesswasserzufuhrleitung der Wasserentsalzungseinrichtung von der Wasserreinigungseinrichtung
- 89: Sauerstoffproduktleitung
- 90: Pre-Reformer
- 91: Pre-Reformer Produktleitung zu der Synthesegasherstellungseinrichtung (ATR)
- 92: Externe Zufuhrleitung für Kohlendioxid
- 93: Zufuhrleitung für Methan des Pre-Reformers
- 94: Zufuhrleitung für Wasserdampf des Pre-Reformers
- 95: Zufuhrleitung für Brennstoff des Pre-Reformers
- 96: Wasserstoffproduktabfuhrleitung
- 97: Prozesswasserabfuhrleitung der Fischer-Tropsch-Einrichtung / Prozesswasserzufuhrleitung der Verdampfungseinrichtung
- 98: Sauerstoffzufuhrleitung zu der Synthesegasherstellungseinrichtung (ATR)
- 99: Sauerstoffzufuhrleitung (extern) zu der Synthesegaseinrichtung (ATR)
- 100: Sauerstoffabfuhrleitung der Elektrolyseeinrichtung (PEM und Alkali)

## Patentansprüche

1. Anlage (10) zur Herstellung von synthetischen Kraftstoffen, insbesondere von Flugturbinenkraftstoff (Kerosin), Rohbenzin und/oder Diesel, umfassend:
a) eine Synthesegasherstellungseinrichtung (12) zur Herstellung eines Kohlenmonoxid, Wasserstoff und Kohlendioxid umfassenden Rohsynthesegases aus i) Kohlendioxid, ii) Wasser, iii) Methan und/oder Wasserstoff und iv) Sauerstoff, wobei die Synthesegasherstellungseinrichtung (12) mindestens einen autothermen Reformer (12) umfasst, wobei der mindestens eine autotherme Reformer (12) mindestens eine Zufuhrleitung i) für Kohlendioxid (18, 92), ii) für Wasser (91), iii) für Methan und/oder für Wasserstoff (91, 63) und iv) für Sauerstoff (98, 99) sowie eine Abfuhrleitung (20) für Rohsynthesegas umfasst,
b) eine Trenneinrichtung (28) zur Abtrennung von Kohlendioxid aus dem in der Synthesegasherstellungseinrichtung (12) hergestellten Rohsynthesegas mit einer Abfuhrleitung (30) für Kohlendioxid und einer Abfuhrleitung (32) für Synthesegas,
c) eine Fischer-Tropsch-Einrichtung (34) zur Herstellung von Kohlenwasserstoffen durch ein Fischer-Tropsch-Verfahren aus dem Synthesegas, aus dem in der Trenneinrichtung (28) Kohlendioxid abgetrennt wurde,
d) eine Raffinationseinrichtung (36) zur Raffination der in der Fischer-Tropsch-Einrichtung (34) hergestellten Kohlenwasserstoffe zu den synthetischen Kraftstoffen, und
e₁) eine Elektrolyseeinrichtung (56) zur Auftrennung von Wasser in Wasserstoff und Sauerstoff umfasst, wobei die Elektrolyseeinrichtung (56) eine Wasserzufuhrleitung (74), eine Sauerstoff- oder Luftabfuhrleitung (59, 100) und eine Wasserstoffabfuhrleitung (62) aufweist, und, wobei von der Sauerstoffabfuhrleitung (100) die Zufuhrleitung (98) für Sauerstoff in den mindestens einen autothermen Reformer (12) und/oder von der Wasserstoffabfuhrleitung (62) die Zufuhrleitung (63) für Wasserstoff in den mindestens einen autothermen Reformer (12) führt, und/oder
e₂) einen Methan-Dampfreformer (31) umfasst, welcher mindestens eine Zufuhrleitung für Methan (13), für Wasser (23) und für Wasserstoff (61) sowie eine Abfuhrleitung (21) für Rohsynthesegas umfasst, wobei die Abfuhrleitung (21) für Rohsynthesegas in den mindestens einen autothermen Reformer (12) führt oder die Anlage ferner eine Wasserstofftrenneinrichtung (11) umfasst, in welche die Abfuhrleitung (21) für Rohsynthesegas führt, wobei die Wasserstofftrenneinrichtung (11) eine Abfuhrleitung (22) für wasserstoffreduziertes Rohsynthesegas, welche in den mindestens einen autothermen Reformer (12) führt, und eine Wasserstoffabfuhrleitung (62), welche in die Fischer-Tropsch-Einrichtung (34) und/oder in die Raffinationseinrichtung (36) führt, umfasst.

2. Anlage (10) nach Anspruch 1, **dadurch gekennzeichnet, dass** diese ferner einen Pre-Reformer (90) umfasst, der mindestens eine Zufuhrleitung für Wasser(dampf) (94), für Brennstoff (95) und optional für Methan (93) sowie eine Abfuhrleitung (91), welche in den mindestens einen autothermen Reformer (12) führt, umfasst.

3. Anlage (10) nach Anspruch 1 oder 2, **dadurch gekennzeichnet, dass** diese eine Elektrolyseeinrichtung (56) umfasst, wobei der mindestens eine autotherme Reformer (12) eine Wasserstoffzufuhrleitung (63) umfasst, welche von der Wasserstoffabfuhrleitung (62) der Elektrolyseeinrichtung (56) zu dem autothermen Reformer (12) führt.

4. Anlage (10) nach zumindest einem der vorhergehenden Ansprüche, **dadurch gekennzeichnet, dass** der mindestens eine autotherme Reformer (12) einen Nickel-basiertem Katalysator enthält und bei einem Druck von 10 bis 50 bar und einer Temperatur von 700 bis 1.200 °C und bevorzugt bei einem Druck von 20 bis 30 bar und einer Temperatur von 900 bis 1.000 °C betreibbar ist.

5. Anlage (10) nach zumindest einem der vorhergehenden Ansprüche 2 bis 4, **dadurch gekennzeichnet, dass** die Fischer-Tropsch-Einrichtung (34) und/oder die Raffinationseinrichtung (36) eine Gasabfuhrleitung (50, 52) aufweisen, welche mit einer in den Pre-Reformer (90) führenden Zufuhrleitung (95) für Brennstoff verbunden ist/sind.

6. Anlage (10) nach zumindest einem der vorhergehenden Ansprüche, **dadurch gekennzeichnet, dass** diese ferner eine Verdampfungseinrichtung (84) umfasst und die Fischer-Tropsch-Einrichtung (34) eine Prozesswasserabfuhrleitung (97) aufweist, die mit der Verdampfungseinrichtung (84) verbunden ist, wobei die Verdampfungseinrichtung (84) zudem eine Abfuhrleitung für Wasser(dampf) aufweist, welche mit der Zufuhrleitung (94) für Wasser(dampf) des Pre-Reformers (90) verbunden ist.

7. Anlage (10) nach zumindest einem der vorhergehenden Ansprüche, **dadurch gekennzeichnet, dass** die Raffinationseinrichtung (36) ein oder mehrere Produktabfuhrleitungen (48', 48", 54) für synthetische Kraftstoffe aufweist, wobei wenigstens eine der ein oder mehreren Produktabfuhrleitungen (54) für synthetische Kraftstoffe über eine Rückführleitung (54) mit der in den Pre-Reformer (90) führenden Zufuhrleitung (95) für Brennstoff verbunden ist.

8. Anlage (10) nach zumindest einem der vorhergehenden Ansprüche, **dadurch gekennzeichnet, dass** diese eine Elektrolyseeinrichtung (56) umfasst, wobei von der Wasserstoffabfuhrleitung (62) der Elektrolyseeinrichtung (56) eine Leitung (64) zu der Fischer-Tropsch-Einrichtung (34) und von der Wasserstoffabfuhrleitung (62) der Elektrolyseeinrichtung (56) eine Leitung (66) zu der Raffinationseinrichtung (36) führt.

9. Anlage (10) nach zumindest einem der vorhergehenden Ansprüche, **dadurch gekennzeichnet, dass** diese einen Methan-Dampfreformer (31) umfasst und eine Elektrolyseeinrichtung (56) umfasst, wobei von der Sauerstoffabfuhrleitung (100) der Elektrolyseeinrichtung (56) die Zufuhrleitung (98) für Sauerstoff in den mindestens einen autothermen Reformer (12) führt.

10. Anlage (10) nach zumindest einem der Ansprüche 1 bis 8, **dadurch gekennzeichnet, dass** diese einen Methan-Dampfreformer (31) und eine mit dem Methan-Dampfreformer (31) über eine Leitung (21) verbundene Wasserstofftrenneinrichtung (11) umfasst, wobei von der Wasserstofftrenneinrichtung (11) eine Abfuhrleitung (22) für wasserstoffreduziertes Rohsynthesegas in eine Zufuhrleitung des autothermen Reformers (12) führt, eine Wasserstoffabfuhrleitung (62, 64) in die Fischer-Tropsch-Einrichtung (34) und/oder eine Wasserstoffabfuhrleitung (62, 66) in die Raffinationseinrichtung (36) führt und bevorzugt eine Wasserstoffabfuhrleitung (62, 61) in den Methan-Dampfreformer (31) und/oder eine Wasserstoffabfuhrleitung (62, 67) in den Pre-Reformer (90) führt.

11. Anlage (10) nach zumindest einem der vorhergehenden Ansprüche, **dadurch gekennzeichnet, dass** diese eine Wasservollentsalzungseinrichtung (70) umfasst, welche eine Frischwasserzufuhrleitung (72) und/oder mindestens eine Zufuhrleitung (71, 88) für in der Anlage aufbereitetes Prozesswasser sowie eine Abfuhrleitung (74) für entsalztes Wasser aufweist, wobei, wenn die Anlage (10) eine Elektrolyseeinrichtung (56) umfasst, die Abfuhrleitung (74) für entsalztes Wasser mit der Wasserzufuhrleitung der Elektrolyseeinrichtung (56) verbunden ist, wobei vorzugsweise die Wasserentsalzungseinrichtung (70) einen oder mehrere Anionen- und Kationenaustauscher sowie eine Membraneinrichtung zur Entgasung umfasst, welche derart ausgelegt sind, dass Wasser soweit entsalzt und entgast werden kann, dass dessen Leitfähigkeit bei kleiner 20 µS/cm, bevorzugt kleiner 10 µS/cm, besonders bevorzugt kleiner 5 µS/cm und höchst bevorzugt maximal 2 µS/cm liegt.

12. Anlage (10) nach zumindest einem der vorhergehenden Ansprüche, **dadurch gekennzeichnet, dass** diese eine Wasserreinigungseinrichtung (76) umfasst, welche eine von der Raffinationseinrichtung (36) zu der Wasserreinigungseinrichtung (76) führende Prozesswasserzufuhrleitung (80) und eine von dem mindestens einen autothermen Reformer (12) zu der Wasserreinigungseinrichtung (76) führende Prozesswasserzufuhrleitung (82) jeweils zur Reinigung von darin anfallendem Prozesswasser umfasst, wobei vorzugsweise die Wasserreinigungseinrichtung (76) über eine Leitung (88) mit einer Wasservollentsalzungseinrichtung (70) verbunden ist, so dass in der Wasserreinigungseinrichtung (76) gereinigtes Prozesswasser in die Wasservollentsalzungseinrichtung (70) geleitet werden kann.

13. Anlage (10) nach zumindest einem der vorhergehenden Ansprüche, **dadurch gekennzeichnet, dass** der Trenneinrichtung (28) eine Synthesegasverdichtungseinrichtung (43) zur Verdichtung des Gases auf den in der Fischer-Tropsch-Synthese erforderlichen Druck nachgeschaltet ist, wobei die Synthesegasverdichtungseinrichtung (43) mit der Trenneinrichtung (28) über eine Leitung (32) und mit der Fischer-Tropsch-Einrichtung (34) über eine Synthesegaszufuhrleitung (44) verbunden ist, wobei vorzugsweise die Synthesegasverdichtungseinrichtung (43) eine Wasserstoffzufuhrleitung (65) aufweist, welche mit der Wasserstoffabfuhrleitung (62) einer Elektrolyseeinrichtung (56) verbunden ist.

14. Verfahren zur Herstellung von synthetischen Kraftstoffen, insbesondere von Flugturbinenkraftstoff (Kerosin), Rohbenzin und/oder Diesel, welches in einer Anlage (10) nach zumindest einem der vorhergehenden Ansprüche durchgeführt wird.

15. Verfahren nach Anspruch 14, **dadurch gekennzeichnet, dass** bei dem Verfahren kein Kohlendioxid abgeführt wird.

16. Verfahren nach Anspruch 14 oder 15, **dadurch gekennzeichnet, dass** die Anlage (10) einen Pre-Reformer (90) umfasst, wobei in der Fischer-Tropsch-Einrichtung (34) erzeugtes Prozessgas, in der Raffinationseinrichtung (36) erzeugtes Prozessgas und ein Teil der in der Raffinationseinrichtung synthetischen Kraftstoffe als Brennstoff über die Zufuhrleitung (95) in den Pre-Reformer (90) geleitet werden, wobei das Verfahren so gesteuert wird, dass dem mindestens einen autothermen Reformer (12) und bevorzugt der gesamten Anlage (10) ein Minimum an externem Brennstoff zugeführt werden muss.
